(19) **Europäisches Patentamt**
**European Patent Office**
**Office européen des brevets**

(11) **EP 1 531 343 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(51) Int Cl.:
**G01S 17/93** (2006.01)   **G01S 17/66** (2006.01)
**G01S 17/89** (2006.01)

(21) Anmeldenummer: **04025335.3**

(22) Anmeldetag: **25.10.2004**

(54) **Verfahren zur Verfolgung von Objekten**

Method for tracking objects

Procédé de suivi d'objets

(84) Benannte Vertragsstaaten:
**AT BE BG CH CY CZ DE DK EE ES FI FR GB GR HU IE IT LI LU MC NL PL PT RO SE SI SK TR**

(30) Priorität: **14.11.2003 DE 10353348**

(43) Veröffentlichungstag der Anmeldung:
**18.05.2005 Patentblatt 2005/20**

(73) Patentinhaber: **SICK AG**
**79183 Waldkirch (DE)**

(72) Erfinder:
• **Fürstenberg, Kay**
**20459 Hamburg (DE)**
• **Linzmeier, Dirk**
**89077 Ulm (DE)**

• **Lages, Ulrich, Dr.**
**21031 Hamburg (DE)**
• **Dietmayer, Klaus, Prof.**
**89075 Ulm (DE)**

(74) Vertreter: **Manitz, Finsterwald & Partner GbR**
**Postfach 31 02 20**
**80102 München (DE)**

(56) Entgegenhaltungen:
**EP-A- 1 298 454     US-A- 5 806 019**

• **STRELLER D ET AL: "Vehicle and object models for robust tracking in traffic scenes using laser range images" IEEE 5TH INTERNATIONAL CONFERENCE ON INTELLIGENT TRANSPORTATION SYSTEMS, 3. September 2002 (2002-09-03), Seiten 118-123, XP010608272**

EP 1 531 343 B1

**Beschreibung**

Die vorliegende Erfindung betrifft ein Verfahren zur Verfolgung von Objekten, die von einem Sensor für elektromagnetische Strahlung erfassten Gegenständen in einem Refassungsbereich des Sensors entsprechen, auf der Basis von Abstandsbildern des Erfassungsbereichs.

Verfahren der oben genannten Art sind grundsätzlich bekannt. Sie können insbesondere dazu dienen, Bereiche vor und neben einem Kraftfahrzeug zu überwachen. Als Sensor kann dazu insbesondere ein Laserscanner eingesetzt werden, der Abstandsbilder mit Bildpunkten erfasst, die den Abstand von Punkten auf erfassten Gegenständen in Abhängigkeit von einem Polarwinkel wiedergeben.

Eine wesentliche Anwendung der Überwachung ist die automatische Erkennung von Gefahrensituationen. Damit Gefahrensituationen auch möglichst nur dann erkannt werden, wenn eine Gefahrensituation tatsächlich vorliegt, ist es notwendig, genaue Daten über die Lagen und Geschwindigkeiten der erfassten Gegenstände ermitteln zu können.

US 5,806,019, EP 1 298 454 A2 und D. Streller, "Vehice and Object Models for Robust Tracking Scenes using Laser Range Images", The IEEE 5th International Conference on Intelligent Tranportation Systems, 3.-6. September 202, Singapur, beschrieben jeweils ein Verfahren zur Objektverfolgung, das auf der Verfolgung eines einzelnen Bezugspunkt basiert.

Der vorliegenden Erfindung liegt die Aufgabe zugrunde, ein Verfahren der oben genannten Art bereitzustellen, das eine Objektverfolgung mit einer guten Genauigkeit zulässt.

Die Aufgabe wird gelöst durch ein Verfahren mit den Merkmalen des Anspruchs 1.

Bei dem erfindungsgemäßen Verfahren zur Verfolgung von Objekten, die von wenigstens einem Sensor für elektromagnetische Strahlung, insbesondere einem Laserscanner, erfassten Gegenständen in einem Erfassungsbereich des Sensors entsprechen, auf der Basis von in zeitlicher Folge von dem Sensor erfassten Abstandsbildern des Erfassungsbereichs, werden in aufeinanderfolgenden Zyklen wenigstens nach einer Anfangsphase wenigstens zwei auf der Basis der Abstandsbilder ermittelbare Merkmale wenigstens eines Gegenstands bzw. eines diesem entsprechenden Objekts wenigstens während solcher aufeinanderfolgender Zyklen, in denen die Merkmale in den Zyklen erfassbar sind, insoweit getrennt voneinander verfolgt, als in einem aktuellen Zyklus zumindest die Prädiktion von Lagen und/oder Geschwindigkeiten der Merkmale und die Ermittlung von Schätzwerten für die Geschwindigkeiten der Merkmale bei gegebenen aktuellen Lagen der Merkmale getrennt voneinander durchgeführt werden, und es wird auf der Basis der Ergebnisse der Verfolgung der Merkmale wenigstens eine Lage und/oder Geschwindigkeit des Objekts bzw. des diesem entsprechenden Gegenstands ermittelt.

Unter einem Abstandsbild eines Sensors zur Erfassung elektromagnetischer Strahlung, das häufig auch als tiefenaufgelösten Bild oder Entfernungsbild bezeichnet wird, wird eine Menge von bei einer Abtastung des Erfassungsbereichs des Sensors erfassten Bildpunkten verstanden, denen Punkte bzw., je nach Auflösung des Sensors, auch Bereiche eines von dem Sensor erfassten Gegenstands entsprechen. Die Bildpunkte umfassen dabei wenigstens der Lage der zugehörigen Gegenstandspunkte entsprechende Koordinaten zur Definition einer Lage wenigstens in einer Fläche, vorzugsweise einer Ebene, die nicht orthogonal zu einer Blickrichtung des Sensors steht. Die Bildpunkte können weiterhin Daten über weitere, insbesondere optische, Eigenschaften der Gegenstandspunkte, beispielsweise deren Reflektivität, enthalten. Dabei können Regionen des Erfassungsbereichs, in denen keine Gegenstände vorhanden sind, je nach Sensor trotzdem Bildpunkte zugeordnet sein, die dann entsprechend gekennzeichnet sein können.

Sensoren für elektromagnetische Strahlung zur Erfassung solcher Abstandsbilder sind grundsätzlich bekannt. Bei diesem kann es sich bevorzugt um optoelektronische Sensoren handeln, die eine gute Ortsauflösung bieten und daher für das erfindungsgemäße Verfahren bevorzugt sind. So können beispielsweise Systeme mit Stereo-Videokameras verwendet werden, die eine Einrichtung zur Umsetzung der von den Kameras aufgenommenen Abtastdaten in Abstandsbilder aufweisen.

Vorzugsweise werden jedoch Laserscanner verwendet, die bei einer Abtastung einen Erfassungsbereich mit mindestens einem gepulsten Strahlungsbündel abtasten, das einen vorgegebenen Winkelbereich vorzugsweise mit einer Schwenkbewegung, überstreicht und von einem Punkt bzw. Bereich eines Gegenstands, meist diffus, zurückgeworfene Strahlungspulse des Strahlungsbündels detektieren. Dabei wird zur Entfernungsmessung die Laufzeit der ausgesandten und zurückgeworfenen Strahlungspulse erfasst. Die so erfassten Abtastdaten für einen Bildpunkt können dann als Koordinaten den Winkel, bei dem der Reflex erfasst wurde, und die aus der Laufzeit der Strahlungspulse bestimmte Entfernung des Gegenstandspunktes von dem Laserscanner enthalten. Bei der Strahlung kann es sich insbesondere um sichtbares oder infrarotes Licht handeln.

Der Sensor erfasst dabei die Abstandsbilder in zeitlicher, vorzugsweise zeitlich äquidistanter Folge, wobei die Bildpunkte innerhalb eines einzelnen Bildes nicht unbedingt nacheinander erfasst zu werden brauchen.

Bei der Umsetzung der Abtastdaten in Bildpunkte können weiterhin Korrekturen, zum Beispiel in Bezug auf die Bewegung des Sensors, vorgenommen werden, jedoch ist dies nicht notwendig.

Das erfindungsgemäße Verfahren wird zyklisch durchgeführt, wobei vorzugsweise für jeden Zyklus ein neues, aktuelles Bild des Sensors in eine zur Durchführung des Verfahrens geeignete Einrichtung eingelesen bzw. zur Durchführung des Verfahrens bereitgestellt wird.

Erfindungsgemäß wird wenigstens ein Gegenstand bzw. ein entsprechendes Objekt nicht, wie üblich, dadurch verfolgt, dass dieses bzw. der entsprechende Gegenstand durch einen einzelnen Bezugspunkt und dessen Bewegung verfolgt wird. Vielmehr werden hierzu wenigstens zwei Merkmale verwendet, die wenigstens in zwei Phasen einer Objektverfolgung getrennt voneinander verfolgt werden. Aus den Ergebnissen der Verfolgung der Merkmale, beispielsweise deren Lagen und Geschwindigkeiten, werden dann die Lage und/oder Geschwindigkeit des Objekts ermittelt.

Unter Merkmalen eines Gegenstands werden dabei Kombinationen von Bildpunkten verstanden, die in verschiedenen Abstandsbildern, wenn sie überhaupt in diesen auftreten, von anderen Teilen des Abstandsbildes und insbesondere anderen Merkmalen unterscheidbar sind. Vorzugsweise ändern sie sich in Bezug auf das jeweilige Objekt nicht oder in bekannter Weise. Unter der Ermittelbarkeit auf der Basis von Abstandsbildern wird dabei verstanden, dass zur Ermittlung wenigstens der Lagen der Merkmale Informationen aus den Abstandsbildern verwendet werden.

Bei der Verfolgung werden Lagen der Merkmale prädiziert und dann aktuelle Lagen der Merkmale aus einem aktuellen Abstandsbild ermittelt. Auf der Basis dieser Ergebnisse kann dann wenigstens ein Schätzwert für eine Geschwindigkeit der Merkmale ermittelt werden. Der nächste Zyklus kann dann wieder mit der Prädiktion beginnen.

Unter einer getrennten Verfolgung wird dabei verstanden, dass in der zur Prädiktion verwendeten Gleichung für den Zustandsvektor für ein Merkmal das andere nicht explizit als Eingangsgröße auftritt. Gleiches gilt für die Ermittlung der Schätzwerte der Geschwindigkeiten der Merkmale in Beziehung auf die Abhängigkeit von den gegebenen aktuellen Lagen der Merkmale. Das bedeutet aber auch, dass in den Beziehungen auftretende Parameter unter Umständen durch beide Merkmale beeinflusst sind. Vorzugsweise ist dies jedoch nicht der Fall.

Bei der getrennten Verfolgung kann jedoch die Ermittlung der aktuellen Lagen der Merkmale auf der Basis eines aktuellen Abstandsbildes für beide Merkmale gemeinsam und in Abhängigkeit voneinander erfolgen.

Die getrennte Verfolgung braucht dabei nicht in dem Zyklus begonnen zu werden, in dem ein Objekt erstmals auftritt. Vielmehr genügt es, dass eine getrennte Verfolgung erst nach einem oder mehreren Zyklen, d.h. einer Anfangsphase, beginnt, in der beispielsweise eine konventionelle Verfolgung verwendet werden kann.

Die getrennte Verfolgung braucht weiterhin nur während derjenigen Zyklen zu erfolgen, während denen die Merkmale auch tatsächlich erfassbar sind.

Aus den Ergebnissen der Verfolgung der Merkmale eines Objekts können dann Lagen und/oder Geschwindigkeiten des Objekts ermittelt werden.

Überraschenderweise kann mit dem erfindungsgemäßen Verfahren eine deutlich höhere Genauigkeit erzielt werden, als bei konventionellen Verfahren. Dies ist wohl darauf zurückzuführen, dass die Fehler bei der Verfolgung der Merkmale nicht größer sind, als die Fehler bei der gewöhnlichen Objektverfolgung. Bei der Ermittlung der Lagen und Geschwindigkeiten eines Objekts aus denen der Merkmale kann aber ein Ausgleichs- bzw. Mittelungseffekt auftreten, der den Gesamtfehler reduziert.

Die erfindungsgemäße Objektverfolgung braucht nicht auf alle Objekte im Erfassungsbereich des Sensors anwendbar zu sein. Vielmehr versteht es sich, dass sie nur auf Gegenstände anwendbar ist, für die auch Merkmale definierbar sind, was beispielsweise für strukturlose oder kugelförmige Gegenstände nicht der Fall ist.

Bevorzugte Weiterbildungen der Erfindung sind in den Unteransprüchen, der Beschreibung und der Zeichnung beschrieben.

Die bei dem erfindungsgemäßen Verfahren verwendeten Merkmale sollen vorzugsweise charakteristisch und auf der Basis der Abstandsbilder ermittelbar sein.

Um die Erfassung der Abstandsbilder so einfach wie möglich zu halten, ist es bevorzugt, dass zur Ermittlung der Merkmale nur Abstandsinformationen der Abstandsbilder verwendet werden.

In einfachen Abstandsbildern sind Gegenstände nur durch ihre Kontur gegeben. Weiterhin weisen in vielen wichtigen Anwendungsfällen, insbesondere bei der Überwachung des Umfeldes eines Kraftfahrzeugs, die erfassten Gegenstände typische Konturen auf, die charakteristische, voneinander getrennte Abschnitte aufweisen. Es ist daher bevorzugt, dass wenigstens eines der Merkmale einen charakteristischen Konturabschnitt eines Gegenstandes in dem Erfassungsbereich betrifft. Vorzugsweise ist dies bei wenigstens zwei Merkmalen für den Gegenstand der Fall.

In dem wichtigen Anwendungsfall der Überwachung eines Bereichs vor einem Kraftfahrzeug treten besonders häufig andere Kraftfahrzeuge als Gegenstände auf, die in einer Erfassungsebene eines Sensors bzw. parallel zur Fahrbahn einen näherungsweise rechtwinkligen Umriss aufweisen. Dieser kann sich in den Abstandsbildern durch strekkenartige und insbesondere winkel- bzw. "L"-förmige Verteilungen der entsprechenden Bildpunkte äußern. Es werden daher für einen Gegenstand, der in dem Erfassungsbereich eine näherungsweise rechteckige Kontur aufweist, als Merkmale zwei im Wesentlichen zueinander orthogonale Seiten des Gegenstands verwendet.

Viele Gegenstände weisen aber nicht nur charakteristische Konturmerkmale oder sogar keine Konturmerkmale auf. Die Merkmale brauchen daher nicht notwendig ausschließlich aus Abstandsinformationen in Bezug auf die Bildpunkte bestimmt zu werden. Sollen möglichst viele oder charakteristische Merkmale für einen Gegenstand verfolgt werden, ist es daher bevorzugt, dass wenigstens ein Merkmal für den Gegenstand verwendet wird, das durch Unterschiede in der Reflektivität verschiedener von dem Sensor erfassbarer Bereiche gegeben ist.

Die aktuellen Lagen der Merkmale werden auf der Basis eines aktuellen Entfernungsbildes ermittelt. Ist ein besonders einfaches Verfahren gewünscht, ist es bevorzugt, dass die Ermittlungen der aktuellen Lagen zweier Merkmale desselben Objekts bzw. Gegenstands aus einem aktuellen Abstandsbild in einem aktuellen Zyklus getrennt voneinander erfolgen.

Die Merkmale für einen Gegenstand bzw. ein Objekt sind jedoch nicht unabhängig voneinander, da ihre räumlichen Lagen relativ zueinander durch den Gegenstand vorgegeben sind. Um diese Abhängigkeit zu verwenden und damit ein höhere Genauigkeit zu erzielen, ist es bevorzugt, dass in einem vorhergehenden Zyklus für wenigstens zwei Merkmale desselben Objekts Lagen der Merkmale in einem aktuellen Zyklus prädiziert werden, dass aus den prädizierten Lagen der Merkmale des Objekts eine prädizierte Lage des Objekts ermittelt wird, dass dem Objekt auf der Basis der prädizierten Lage des Objekts Bildpunkte des aktuellen Abstandsbildes zugeordnet werden, und dass aktuelle Lagen der Merkmale in dem aktuellen Zyklus auf der Basis der zugeordneten Bildpunkte ermittelt werden. Bei dieser Ausführungsform erfolgt die Ermittlung der Merkmale bzw. deren Lage also nicht in unmittelbarer Abhängigkeit von deren prädizierten Lagen, sondern es wird zunächst eine Objektlage prädiziert, auf deren Basis nur eine Zuordnung von Bildpunkten zu dem Objekt erfolgt. Dabei kann vorzugsweise vor der Zuordnung eine Segmentierung des Abstandsbildes durchgeführt werden, bei der Bildpunkte zu Segmenten zusammenfasst werden. Bei Segmenten mit wenigstens zwei Bildpunkten erfüllen wenigstens zwei Bildpunkte dabei wenigstens ein Segmentierungskriterium, das insbesondere den Abstand zweier Bildpunkte betreffen kann. Es kann aber auch eine Segmentierung unter Verwendung von Reflektivitätsunterschieden erfolgen. Die Zuordnung der Bildpunkte zu Objekten erfolgt dann durch eine Zuordnung von Segmenten zu Objekten. Dieses Vorgehen ermöglicht eine besonders einfache Zuordnung von Bildpunkten zu Objekten, aus denen dann die Merkmale ermittelt werden. In diesem Schritt, der auch als wenigstens indirekte "Messung" der Merkmale aufgefasst werden kann, können daher Abhängigkeiten zwischen den Merkmalen eines Objekts bzw. Gegenstands bzw. deren Ermittlung auftreten.

Wenn eine Segmentierung des Abstandsbildes durchgeführt wird, kann der Fall auftreten, dass einem Objekt oder einem Merkmal des Objekts mehrere Segmente zuzuordnen sind. Um die Zuordnung zu vereinfachen, ist es bevorzugt, dass die Abstandsbilder segmentiert werden, und dass in dem Fall, dass mehrere Segmente einem Objekt zuzuordnen sind, die Segmente zu einem neuen Segment zusammengefasst werden. Es ist dann nur noch in diesem neuen Segment nach den Merkmalen zu suchen. Da die Segmente Teile mehrerer Merkmale enthalten können, wird so die Ermittlung der Lagen der Merkmale wesentlich vereinfacht.

Insbesondere in dem Fall, dass die Abstandsbilder segmentiert werden, ist es daher besonders bevorzugt, dass geprüft wird, ob zwei Merkmale für ein Objekt in einem Segment enthalten sind, und dass für die unabhängige Verfolgung der Merkmale nur entsprechende Teile eines Segments verwendet werden.

Sind Merkmale eines Objekts, beispielsweise die zwei Seiten eines rechteckigen Objekts, nicht vollständig sichtbar, kann es schwierig sein zu erkennen, welche der Seiten die Längs- und welche die Front- oder Heckseite ist. Es kann hierzu beispielsweise als eine zusätzliche Zustandsvariable des Merkmals ein Winkel mitverfolgt werden, der die Orientierung des Merkmals in einem vorgegebenen Koordinatensystem, beispielsweise einem Sensorkoordinatensystem wiedergibt. Die Ermittlung des Winkels kann jedoch mit großen Fehlern behaftet sein. Insbesondere, wenn die Geschwindigkeit eines Merkmals bzw. Objekts einen vorgegebenen Grenzwert übersteigt, ist es daher bevorzugt, dass zur Zuordnung wenigstens eines Merkmals eines Gegenstands, das sich erfahrungsgemäß in einer vorgegebenen Richtung relativ zu dem Merkmal oder einem anderen Merkmal bewegt, und Teilen eines Segments in einem aktuellen Zyklus die ermittelte aktuelle Lage bzw. Orientierung des Merkmals relativ zu der Geschwindigkeit des Merkmals verwendet wird. Als Geschwindigkeit des Merkmals können insbesondere die Geschwindigkeit des entsprechenden Objekts, die prädizierte Geschwindigkeit des Merkmals im aktuellen Zyklus oder die geschätzte Geschwindigkeit des Merkmals im vorhergehenden Zyklus verwendet werden. Der Grenzwert wird in Abhängigkeit von zu erwartenden Fehlern in der Bestimmung der Richtung der Geschwindigkeit ermittelt, die mit zunehmender Geschwindigkeit häufig abnehmen. Bei kleinen Geschwindigkeiten kann dann auf die Winkelermittlung zurückgegriffen werden. Die Einbeziehung solcher heuristischer Elemente kann die Durchführung des Verfahrens wesentlich erleichtern. So bewegen sich die allermeisten Fahrzeuge parallel zu ihrer Längsseite und nicht quer dazu, was die Erkennung der Längsseite, auch wenn von dieser mehr als die Hälfte verdeckt ist, wesentlich erleichtern kann.

Werden zwei Merkmale für dasselbe Objekt verfolgt, stehen zwei geschätzte Geschwindigkeiten zur Ermittlung der Objektgeschwindigkeit zur Verfügung. Obwohl prinzipiell eine der geschätzten Geschwindigkeiten allein als Objektgeschwindigkeit angesehen werden könnte, ist es bevorzugt, dass die Geschwindigkeit eines Objekts als gewichteter Mittelwert der Geschwindigkeiten der Merkmale für das Objekt ermittelt wird. Hierdurch findet ein Ausgleich von Fehlern in den geschätzten Geschwindigkeiten der Merkmale statt, der den Fehler in der Geschwindigkeit des Objekts in der Regel herabsetzt.

Dabei ist es besonders bevorzugt, dass zur Verfolgung der Merkmale zunächst Lagen der Merkmale prädiziert werden, dass nach einer Ermittlung der Merkmale in einem aktuellen Abstandsbild in Abhängigkeit von den entsprechenden prädizierten Lagen eine aktuelle Lage des Merkmals ermittelt oder geschätzt wird, und dass zur Ermittlung der Geschwindigkeit des Objekts die Geschwindigkeit eines Merkmals stärker gegenüber der Geschwindigkeit des anderen Merkmals gewichtet wird, bei dem die Abweichungen zwischen der prädizierten Lage des Merkmals und der auf der Basis eines aktuellen Abstandsbildes ermittelten Lage des Merkmals kleiner ist als bei dem anderen Merkmal. Die Lage des Merkmals kann dabei insbesondere durch einen Bezugspunkt des Merkmals gegeben sein. Bei Verwendung eines Kalman-Filters zur Verfolgung der Merkmale kann als Abweichung insbesondere der Innovationsvektor verwendet werden, der unter anderem die Differenz zwischen den geschätzten und den ermittelten Lagen der Merkmale wiedergeben kann. Auf diese Weise kann eine besonders genaue Ermittlung der Geschwindigkeit des Objekts erfolgen, da die Geschwindigkeit desjenigen Merkmals besonders hoch gewichtet wird, dessen Bewegung bzw. Lage am besten vorhergesagt bzw. verfolgt wird.

Prinzipiell können sowohl für den Gegenstand bzw. das Objekt als auch für ein Merkmal beliebige Bezugspunkte gewählt werden, die zur Verfolgung und insbesondere der Festlegung der Lagen dienen können. Beispielsweise können deren geometrische Schwerpunkt verwendet werden. Um eine einfache und gleichzeitig genaue Ermittlung der Bezugspunkte zu ermöglichen, ist es bevorzugt, dass die Bezugspunkte von linearen Merkmalen Mittelpunkte der diese darstellenden Strecken sind. Der Mittelpunkt eines linearen Merkmals, insbesondere eines eine Seite darstellenden Merkmals bzw. einer Strecke, kann insbesondere der Mittelpunkt eines Verbindungsvektors sein, der die Enden einer das Merkmal darstellenden Strecke verbindet. Es können aber auch andere ähnliche Punkte verwendet werden, beispielsweise ein Punkt, der sich aus einem der Enden und einer erfassten Länge der Strecke des Merkmals zusammen mit der Richtung ergibt.

Je nach Bewegung eines Objekts kann der Fall eintreten, dass von zwei Merkmalen nur noch eines in dem Abstandsbild erfassbar ist. Das nicht sichtbare Merkmal könnte dann für mehrere Zyklen nur durch Prädiktion der Lagen verfolgt werden, bis es beispielsweise wieder aufgefunden wird oder der zu erwartende Fehler der Prädiktion zu groß wird. Es ist jedoch bevorzugt, dass in dem Fall, dass ein erstes von wenigstens zwei Merkmalen in einem aktuellen Zyklus nicht in dem aktuellen Abstandsbild erkennbar ist, die Verfolgung des ersten Merkmals abgebrochen wird. Die Verfolgung des anderen Merkmals wird aber fortgeführt. Hierdurch geht, im Gegensatz zu gewöhnlichen Objektverfolgungsverfahren höchstens geringe Information verloren, da das Objekt immer noch über das andere Merkmal verfolgt werden kann.

Das Merkmal kann dann nach einiger Zeit wieder in den Abtastbildern auftauchen. Es ist daher bevorzugt, dass in dem Fall, dass bei einer Verfolgung eines Objekts anhand wenigstens eines Merkmals in einem aktuellen Zyklus ein weiteres Merkmal erkannt wird, dieses weitere Merkmal ebenfalls verfolgt wird, wobei zur Initialisierung die Ergebnisse der Verfolgung des wenigstens einen Merkmals verwendet werden. Dieses Verfahren wird vorzugsweise auch für Objekte verwendet, die anfänglich nur durch ein Merkmal verfolgbar waren. Die Verwendung von insbesondere Geschwindigkeitsinformationen aus der Verfolgung des einen Merkmals zur Initialisierung der Verfolgung des weiteren Merkmals führt zu einer genauen Verfolgung auch des weiteren Merkmals schon nach dem ersten Verfolgungszyklus für das weitere Merkmal.

Um eine möglichst gute Identifizierung von Merkmalen, insbesondere der Seiten von rechteckigen Gegenständen bzw. Objekten, zu ermöglichen, ist es bevorzugt, dass ein Objekt nach einem ersten Auffinden zunächst für wenigstens einen weiteren Zyklus mit einem Objektverfolgungsverfahren verfolgt wird, und dass die Ergebnisse dieser Objektverfolgung zur Initialisierung der Merkmalsverfolgung genutzt werden. Zur Initialisierung kann insbesondere aus der Objektverfolgung gewonnene Bewegungsinformation, beispielsweise die Geschwindigkeitsinformation und/oder die Unsicherheitsinformation in Bezug auf die Verfolgung, die zur Ermittlung der Größe eines Suchbereichs verwendbar sein kann, verwendet werden.

Grundsätzlich kann bei der Verfolgung der Merkmale nach der Ermittlung der Lagen aus einem aktuellen Abstandsbild allein diese Information zur Prädiktion und zur Ermittlung der Lagen und Geschwindigkeiten des entsprechenden Objekts verwendet werden. Es ist jedoch bevorzugt, dass aus einem aktuellen Abstandsbild aktuelle Lagen für wenigstens zwei Merkmale desselben Objekts ermittelt werden, und dass eine Schätzung wenigstens der Lagen der Merkmale auf der Basis der prädizierten Lagen und der ermittelten aktuellen Lagen für die Merkmale unabhängig voneinander erfolgt. Zur Schätzung kann insbesondere ein Filter verwendet werden, der zu einem Fehlerausgleich führt. Beispielsweise können ein Kalman-Filter oder eine Modifikation desselben verwendet werden.

Während durch die Bezugspunktermittlung bei üblichen Verfahren eine gewisse Mittelung über Bildpunkte eines aktuellen Abstandsbildes erfolgt und damit Erfassungsfehler innerhalb eines Bildes ausgeglichen werden, werden bei dem erfindungsgemäßen Verfahren durch die getrennte Verfolgung der Merkmale bereits in zeitlicher Hinsicht Fehler aus den Ergebnissen herausgefiltert. Die Ermittlung der Objektlage und/oder -geschwindigkeit aus diesen Merkmalen bedeutet dann eine zusätzliche Mittelung, die zu einer erhöhten Genauigkeit der Verfolgung gegenüber konventionellen Verfahren führt.

Das erfindungsgemäße Verfahren kann vorteilhaft auch unter der zusätzlichen Verwendung von Videobildern durchgeführt werden.

Weiterer Gegenstand der Erfindung ist ein Computerprogramm mit Programmcode-Mitteln, um das erfindungsgemäße Verfahren durchzuführen, wenn das Programm auf einen Computer ausgeführt wird. Unter einem Computer wird dabei jede Datenverarbeitungseinrichtung verstanden, die insbesondere einen Prozessor, einen Speicher und Schnittstellen zur Zuführung bzw. zur Abgabe von Daten aufweist. Insbesondere kann der Computer einen digitalen Signalprozessor aufweisen.

Weiterhin ist Gegenstand der vorliegenden Erfindung ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird. Bei dem Datenträger kann es sich insbesondere um nichtflüchtige Speicher in Form von entsprechenden Halbleiterbauelementen, CDs, DVDs oder aus Disketten handeln.

Darüber hinaus ist Gegenstand der vorliegenden Erfindung eine Vorrichtung zur Erkennung und Verfolgung von Objekten mit mindestens einem optoelektronischen Sensor, vorzugsweise einem Laserscanner, dessen Sichtbereich den Erfassungsbereich einschließt, und einer mit dem optoelektronischen Sensor verbundenen Datenverarbeitungseinrichtung, die zur Durchführung des erfindungsgemäßen Verfahrens ausgebildet ist. Diese Datenverarbeitungseinrichtung kann insbesondere eine Prädiktionseinheit zur Prädiktion der Lage von Merkmalen in dem aktuellen Zyklus, eine Merkmalsermittlungseinrichtung zum Ermitteln einer aktuellen Lage von Merkmalen aus einem aktuellen Abstandsbild, eine Schätzeinrichtung zur Schätzung von Geschwindigkeiten der Merkmale und eine Einrichtung zur Bestimmung einer aktuellen Objektlage und/oder einer Objektgeschwindigkeit aus der ermittelten oder geschätzten Lage und/oder geschätzten Geschwindigkeit der Merkmale desselben Objekts umfassen.

Die Erfindung eignet sich insbesondere zum Einsatz zur Überwachung eines Bereichs vor einem Fahrzeug, das mit einer erfindungsgemäßen Vorrichtung ausgestattet ist.

Die Erfindung wird nun weiter beispielhaft anhand der Zeichnung erläutert. Es zeigen:

Fig. 1 eine schematische Draufsicht auf eine Szene mit einem Fahrzeug, an dem ein Laserscanner angebracht ist, und zwei Fahrzeugen im Erfassungsbereich des Laserscanners,

Fig. 2 ein Ablaufdiagramm eines Verfahrens zur Erkennung und Verfolgung von Objekten nach einer bevorzugten Ausführungsform der Erfindung,

Fig. 3 eine schematische Darstellung eines Segments mit Bildpunkten zur Erläuterung der Prüfung, ob das Segment eine Strecke darstellt,

Fig. 4 eine schematische Darstellung eines Winkelsegments mit Bildpunkten zur Erläuterung der Prüfung, ob das Segment einen Winkel mit zwei Strecken darstellt

Fig. 5 eine schematische Darstellung eines Winkelsegments zur Erläuterung der Ermittlung der Länge und Breite unter Verwendung der Geschwindigkeit,

Fig. 6 eine schematische Darstellung eines Winkelsegments zur Erläuterung der Ermittlung der Länge und Breite unter Verwendung von Verbindungsvektoren zwischen Bildpunkten, und

Fig. 7 eine schematische Darstellung eines Fahrzeugs in aufeinander folgenden Zyklen mit jeweils erfassten Bildpunkten und ermittelte und tatsächlichen Lagen von Bezugspunkten.

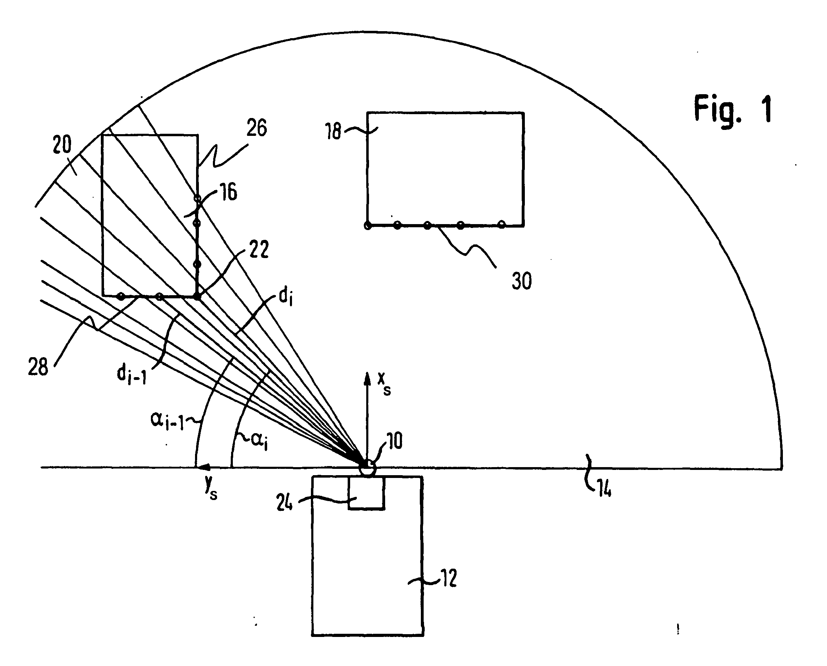

In Fig. 1 ist ein Laserscanner 10 an der Frontseite eines Fahrzeugs 12 montiert, um Gegenstände vor dem Fahrzeug 12 zu erfassen. Der Laserscanner 10 weist einen in Fig. 1 nur teilweise gezeigten, einen Überwachungsbereich darstellenden Erfassungsbereich 14 auf, der aufgrund der Lage symmetrisch zur Längsachse des Fahrzeugs 12 einen Winkel von etwa 180˚ abdeckt. Der Erfassungsbereich 14 ist in Fig. 1 nur schematisch und zur besseren Darstellung insbesondere in radialer Richtung zu klein dargestellt. In dem Erfassungsbereich 14 befinden sich beispielhaft zwei sich relativ zu dem Fahrzeug 12 bewegende Gegenstände 16 und 18, bei denen es sich um Fahrzeuge handelt.

Der Laserscanner 10 tastet seinen Erfassungsbereich 14 in einer Abtastebene in grundsätzlich bekannter Weise mit einem mit konstanter Winkelgeschwindigkeit geschwenkten, gepulsten Laserstrahlungsbündel 20 ab, wobei ebenfalls umlaufend in konstanten Zeitabständen T zu Zeiten $\tau_i$ in festen Winkelbereichen um einen mittleren Winkel $\alpha_i$ detektiert wird, ob das Laserstrahlungsbündel 20 von einem Punkt bzw. Bereich eines Gegenstands zurückgeworfen wird. Der Index i läuft dabei von 1 bis zur Anzahl der Winkelbereiche im Erfassungsbereich. Von diesen Winkelbereichen sind in Fig. 1 nur einzelne gezeigt, u. a. die den mittleren Winkeln $\alpha_{i-1}$ und $\alpha_i$ zugeordneten Winkelbereiche. Hierbei sind die Winkelbereiche zur deutlicheren Darstellung wiederum übertrieben groß gezeigt. Anhand der Laufzeit des Laserstrahlpulses wird der Sensorabstand $d_i$ des jeweils erfassten Gegenstandpunktes von dem Laserscanner 10 ermittelt. Der Laserscanner 10 erfasst daher in seinem $x_s$ - $y_s$ - Koordinatensystem als Koordinaten in einem Rohdatenelement für einen Gegenstandspunkt 22 auf der Oberfläche des Gegenstands 16 den Winkel $\alpha_i$ und den bei diesem Winkel festgestellten Abstand $d_i$, d.h. die Position des Gegenstandspunktes 22 in Polarkoordinaten relativ zu dem Fahrzeug 12. Bei einer Abtastung des Erfassungsbereichs 14 werden von dem Laserscanner 10 somit geordnet nach aufsteigenden Polarwinkeln Rohdatenelemente mit Koordinaten ($\alpha_i$, $d_i$) bereitgestellt, wobei i eine natürliche Zahl zwischen 1 und der Anzahl der von dem Laserscanner 10 erfassten Rohdatenelemente ist. Die Menge der bei einer Abtastung erfassten Rohdatenelemente bzw. daraus, gegebenenfalls nach Korrektur der Daten und/oder Transformation in ein anderes Koordinatensystem, erhaltenen Entfernungsbildpunkte, im Folgenden einfach als Bildpunkte bezeichnet, bildet ein Abstandsbild im Sinne der Erfindung. Die Bildpunkte werden dabei in der Reihenfolge der Erfassung, d.h. zunehmender Polarwinkel abgespeichert.

Der Laserscanner 10 tastet seinen Erfassungsbereich 14 jeweils in aufeinander folgenden Abtastungen mit gleichem Zeitabstand T ab, so dass eine zeitliche Folge von Abtastungen und damit Abstandsbildern entsteht.

Zur Verarbeitung der Rohdatenelemente bzw. Entfernungsbildpunkte weist der Laserscanner 10 eine Auswerteelektronik bzw. Datenverarbeitungseinrichtung 24 auf, die im Beispiel in dem Laserscanner 10 angeordnet ist, grundsätzlich aber auch davon abgesetzt angeordnet sein kann. Die Datenverarbeitungseinrichtung 24 weist u. a. einen zur Ausführung eines Verfahrens nach einer bevorzugten Ausführungsform der Erfindung programmierten digitalen Signalprozessor, eine mit dem digitalen Signalprozessor verbundene Speichereinrichtung sowie Schnittstellen zur Ausgabe von Daten an eine in den Figuren nicht gezeigte Fahrzeugsteuerung auf.

Zur Objekterkennung und -verfolgung werden Kalman-Filter verwendet, die grundsätzlich bekannt sind. Kalman-Filter zu Objektverfolgung sind beispielsweise in der am 28. September 2001 eingereichten deutschen Patentanmeldung DE 101 48 071 A1 und in der in der Reihe Fortschritt-Berichte, Sachgebiet: Verkehrstechnik/Fahrzeugtechnik, Band Nr. 438 veröffentlichten Dissertation von Kirchner, Alexander mit dem Titel "Sensordatenverarbeitung eines Laserscanners für autonome Fahrfunktionen von Kraftfahrzeugen", Hamburg, 2000, ISBN: 3-18-343812-7, ISSN: 0178-9449 genauer beschrieben, deren Inhalt hiermit durch Bezugnahme in die Beschreibung aufgenommen wird.

Bei der Anwendung eines Kalman-Filters wird die Beschreibung eines Prozesses durch ein sich auf lineare, zeitinvariante Zustandsdifferenzengleichungen stützendes Modell verwendet. Ein Zustand zum Zeitpunkt k wird durch einen Zustandsvektor z(k) beschrieben. Es wird angenommen, dass sich der Zustand z(k+1) zur Zeit k+ 1 aus z(k) gemäß folgender Gleichung ergibt:

$$z(k+1) = A \cdot z(k) + w(k) \qquad w(k) = N(0, Q)$$

A bezeichnet dabei eine n x n Systemmatrix, die einen Zusammenhang zwischen den Zuständen zum Zeitpunkt k und k+ 1 wiedergibt, und die Zufallsvariablen w dient zur Modellierung unbekannter, aber auch bestimmter, im Prinzip bekannter Einflüsse auf die Zeitentwicklung des Zustands, d.h. das Modellrauschen. Sie wird als normalverteilt mit einer Kovarianzmatrix Q, zeitlich unkorreliert und mittelwertfrei angenommen.

Gemessen wird jedoch nicht der volle Zustandsvektor z(k), sondern nur ein Messvektor y(k), von dem angenommen wird, dass dieser gemäß folgender Gleichung mit dem Zustandsvektor z(k) zusammenhängt:

$$y(k) = C \cdot z(k) + v(k) \qquad v(k) = N(0, R)$$

C ist dabei eine m x n Messmatrix und die Zufallsvariablen v modelliert das Messrauschen, das als normalverteilt mit einer Kovarianzmatrix R, zeitlich unkorreliert und mittelwertfrei angenommen wird.

Die Kovarianzmatrizen R und Q werden als bekannt vorausgesetzt.

Der Kalman-Filter Algorithmus wird üblicherweise in zwei Teile gegliedert, nämlich die Prädiktion und die Innovation, wobei angenommen wird, dass die Ermittlung eines aktuellen Messvektors nicht gesondert ausgewiesen zu werden braucht. Da bei der Objektverfolgung die Ermittlung des aktuellen Messvektors jedoch ein wesentlicher Schritt ist, der einigen Aufwand erfordert, wird hier von drei Teilen ausgegangen.

Der erste Teil ist die Prädiktion. In diesem Schritt werden ausgehend von einem a-posteriori Schätzwert $\hat{z}(k)$ für den Zustandsvektor z im Zyklus bzw. zur Zeit k ein Wert für den Zustandsvektor im folgenden Zyklus k+1 und ausgehend von einer Schätzfehlerkovarianzmatrix P(k) im Zyklus k eine vorhergesagte Schätzfehlerkovarianzmatrix P-(k+1) und ein vorhergesagter Zustandsvektor z-(k+1) für den folgenden Zyklus k+ 1 vorhergesagt bzw. prädiziert:

$$z^-(k+1) = A \cdot \hat{z}(k)$$

$$P^-(k+1) = A \cdot P(k) \cdot A^T + Q.$$

Im zweiten Teil, der Messvektorbestimmung, wird der Messvektor y(k+1) ermittelt. Dieser Vorgang wird später genauer beschrieben.

Der dritte Teil, die Innovation, umfasst die Berechnung eines a posteriori Schätzwertes für den Zustandsvektor in Abhängigkeit von dem aktuellen Messvektor y(k+1):

$$\hat{z}(k+1) = z^-(k+1) + K(k+1) \cdot \left(y(k+1) - C \cdot z^-(k+1)\right)$$

und die Berechnung einer a posteriori Schätzfehlerkovarianzmatrix

$$P(k+1) = P^-(k+1) - K(k+1) \cdot C \cdot P^-(k+1)$$

nachdem eine Kalman-Matrix K für den Zyklus k+1 ermittelt wurde:

$$K(k+1) = P^-(k+1) \cdot C^T \cdot \left(C \cdot P^-(k+1) \cdot C^T + R\right)^{-1}.$$

Der Vektor $a(k+1) = y(k+1)-C\cdot z^-(k+1)$, der die Differenz zwischen dem aktuellen Messvektor y(k+1) und dem erwarteten Messvektor $\hat{y}(k+1)$ wiedergibt, wird im allgemeinen als Innovationsvektor bezeichnet und spiegelt die relative Genauigkeit der Prädiktion gegenüber der neuen Messung wieder.

Prädiktion, Messvektorbestimmung und Innovation werden zyklisch wiederholt.

Bei dem im Folgenden zu schildernden Verfahren wird der Kalman-Filter folgendermaßen verwendet:

Als Zustandsvektoren für Objekte oder Merkmale i werden die Zustandsvektoren $z^i = (x^i, v^i_x, y^i, v^i_y, \varphi^i, \omega^i)^T$ verwendet, in denen $x^i$ und $y^i$ die Lagekoordinaten von entsprechenden Bezugspunkten der Objekte bzw. Merkmale im kartesischen Sensorkoordinatensystem, $v^i_x$ und $v^i_y$ die Komponenten der Geschwindigkeit der Bezugspunkte in dem kartesischen Sensorkoordinatensystem, $\varphi$ der Winkel zwischen der x-Achse des Sensorkoordinatensystems und einer Referenzachse des Objekts bzw. Merkmals und $\omega$ die entsprechende Giergeschwindigkeit bezeichnen.

Zur Modellierung der Dynamik der Gegenständen entsprechenden Objekte und Merkmale werden jeweils der Bezugspunkt und die Referenzrichtung verwendet, wobei sich der Bezugspunkt näherungsweise geradliniggleichförmig und die Referenzrichtung mit konstanter Giergeschwindigkeit bewegen.

Die entsprechende Systemmatrix lautet daher

$$\mathbf{A} = \begin{pmatrix} 1 & T & 0 & 0 & 0 & 0 \\ 0 & 1 & 0 & 0 & 0 & 0 \\ 0 & 0 & 1 & T & 0 & 0 \\ 0 & 0 & 0 & 1 & 0 & 0 \\ 0 & 0 & 0 & 0 & 1 & T \\ 0 & 0 & 0 & 0 & 0 & 1 \end{pmatrix}$$

Beschleunigungen in der Bewegung des Bezugspunktes oder Änderungen der Giergeschwindigkeit werden über das Rauschen berücksichtigt.

Da im Straßenverkehr praktisch alle Fahrzeuge in der Erfassungsebene des Laserscanners einen näherungsweise rechteckigen Umriss aufweisen, werden bei dem Verfahren zwei Typen von Objekten bzw. Gegenständen unterschieden. Gegenstände mit einem näherungsweise rechteckigen Umriss werden durch im Folgenden als Rechteckobjekte bezeichnete Objekte wiedergegeben, während andere Gegenstände als sonstige Objekte bezeichnet werden. Sonstige Objekte werden mit einem gewöhnlichen Objektverfolgungsverfahren verfolgt, das im Folgenden nicht näher dargestellt ist.

Die Rechteckobjekte werden mit einem Verfahren zur Objektverfolgung nach einer bevorzugten Ausführungsform der Erfindung verfolgt. Berührungspunkte zwischen den Verfolgungsverfahren für die Rechteckobjekte und die sonstigen Objekte können sich nur bei der Zuordnung von Segmenten zu Objekten ergeben, wie im Folgenden deutlich werden wird.

Rechteckobjekte werden bei diesem Verfahren unter Verwendung von einem oder zwei Merkmalen, genauer Konturmerkmalen, verfolgt. Da der Laserscanner 10 seinen Erfassungsbereich gewissermaßen von einem Punkt aus abtastet, können für Gegenstände mit einem näherungsweise rechteckigen Umriss in der Erfassungsebene entweder zwei Merkmale, nämlich eine der Längsseiten und deren Front- oder Heckseite, z. B. für das Fahrzeug 16 in Fig. 1 die Längsseite 26 und die Frontseite 28, oder nur ein Merkmal, nämlich eine dieser Seiten, z.B. die Längsseite 30 des Fahrzeugs 18 in Fig. 1, erfasst werden. Im vorliegenden Beispiel wird angenommen, dass sich ein Gegenstand, von dem nur ein einer Strecke entsprechendes Segment gefunden bzw. verfolgt werden kann, entweder tangential oder radial zum dem Laserscanner 10 bzw. in Bezug auf die Schwenkbewegung des Laserstrahlungsbündel 20 bewegt. Um dies sicherzustellen, kann gegebenenfalls eine Verdeckungserkennung durchgeführt werden.

In dem Entfernungsbild treten daher für Rechteckobjekte Segmente in Form von Winkelsegmenten mit entlang den Schenkeln eines näherungsweise rechteckigen Winkels (im Folgenden nur kurz als Winkel bezeichnet) angeordneten Bildpunkten oder in Form von Streckensegmenten mit näherungsweise entlang einer Strecke bzw. eines Geradenabschnitts angeordneten Bildpunkten auf. Als Merkmale für einen Gegenstand bzw. ein entsprechendes Rechteckobjekt werden daher den Seiten entsprechende Strecken eines Winkels oder einzelnen Strecken verwendet und zumindest während der Prädiktion und der Innovation in Bezug auf die Geschwindigkeiten getrennt voneinander verfolgt. Als Modell für ein Merkmal wird dabei ein Modell für das entsprechende Objekt verwendet.

Bei allen Rechteckobjekten und Merkmalen wird als Bezugspunkt der durch die Mitten der Seiten bzw. der Seite bestimmte Mittelpunkt verwendet, soweit nichts anderes angegeben ist.

Weiterhin werden für alle Rechteckobjekte eine bislang aufgetretene maximale Länge der Längsseite und/oder eine bislang aufgetretene maximale Breite gespeichert. Bei der Initialisierung werden die Längen und Breiten auf der Basis wenigstens einer Ausdehnung des Objekts in dem ersten Abstandbild, in dem das Objekt aufgetaucht ist, zunächst geschätzt.

In den Kalman-Filtern für die Verfolgung der Merkmale werden als Kovarianzmatrizen die gleichen Kovarianzmatrizen wie für die Verfolgung eines entsprechenden Objekts, d.h. beispielsweise folgende Matrizen, verwendet:

$$
Q_{\underline{x}} = \begin{pmatrix}
E(xx) & E(xv_x) & 0 & 0 & 0 & 0 \\
E(v_x x) & E(v_x v_x) & 0 & 0 & 0 & 0 \\
0 & 0 & E(yy) & E(yv_y) & 0 & 0 \\
0 & 0 & E(v_y y) & E(v_y v_y) & 0 & 0 \\
0 & 0 & 0 & 0 & E(\varphi\varphi) & E(\varphi\omega) \\
0 & 0 & 0 & 0 & E(\omega\varphi) & E(\omega\omega)
\end{pmatrix},
$$

wobei E jeweils den Erwartungswert bezeichnet. Beispielsweise können bei Annahme einer isotropen Bewegungsmöglichkeit folgende Setzungen vorgenommen werden:

$$E(xx) = E(yy) \qquad = \left(\tfrac{1}{2}\sigma_a T^2\right)^2$$

$$E(xv_x) = E(v_x x) = E(yv_y) = E(v_y y) \quad = \quad \frac{\sigma_a^2 T^3}{2}$$

$$E(v_x v_x) = E(v_y v_y) \qquad = \left(\sigma_a T\right)^2$$

$$E(\varphi,\varphi) = \tfrac{1}{4} T^4 \sigma_{\dot\omega}^2$$

$$E(\varphi,\omega) = \tfrac{1}{2} T^3 \sigma_{\dot\omega}^2$$

$$E(\omega,\omega) = T^2 \sigma_{\dot\omega}^2$$

$\sigma_{\dot\omega}$ kann dabei abgeschätzt werden durch die maximal zu erwartende Änderungsrate der Giergeschwindigkeit des verfolgten Objekts und $\sigma_\alpha$ durch die maximal zu erwartende Beschleunigung. Zur detaillierteren Darstellung wird auf die durch Bezugnahme in die Beschreibung aufgenommene Arbeit von Kirchner verwiesen. Die Kovarianzen können für jedes Objekt insbesondere auch in Abhängigkeit von verwendeten Objektklassen gewählt werden.

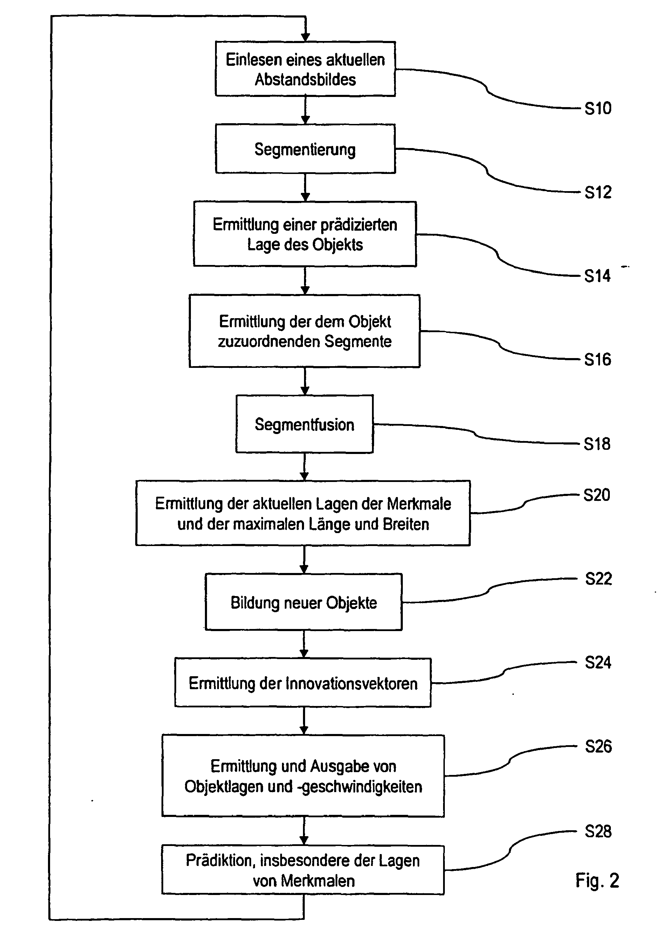

Der Ablauf eines Zyklus des zyklisch ablaufenden Verfahrens ist in groben Zügen in dem Ablaufdiagramm in Fig. 2 gezeigt. Es umfasst die drei bereits erwähnten Teile, nämlich die Prädiktion, die Messvektorbildung und die Innovation. Entsprechend der tatsächlichen Verfolgung wird die Beschreibung mit der Messvektorbildung begonnen, die in den Schritten S 10 bis S20 durchgeführt wird. Die Innovation erfolgt in den Schritten S22 und S24, die Prädiktion in Schritt S28. Schritt S26 betrifft die Ermittlung von Objektlagen und -geschwindigkeiten

Nach dem Erfassen eines neuen Abstandsbildes durch den Laserscanner 12 wird dieses in Schritt S 10 als aktuelles Abstandsbild eingelesen.

Nach einer Transformation der Bildpunkte des Abstandsbildes in das kartesische Sensorkoordinatensystem LS unter Berücksichtigung der Eigenbewegung des Fahrzeugs 12 und gegebenenfalls nach einer Korrektur der in dem Abstandsbild enthaltenen Bildpunktdaten werden Bildpunkte des Abstandsbildes in Schritt S12 zu Segmenten zusammengefaßt. Dabei gehört ein Bildpunkt zu einem Segment, wenn er zu mindestens einem anderen Bildpunkt des Segments einen Abstand hat, der kleiner ist als ein vorgegebener Höchstabstand. Die Bildung von Segmenten und insbesondere die Wahl von Abstandskriterien kann dabei unter Verwendung eines euklidischen Abstandes, bei dem gegebenenfalls die Differenzen zwischen den Koordinaten des Bildpunktes in Richtung der Bewegungsrichtung geringer gewichtet werden als quer zur Bewegungsrichtung, oder zweier Abstände jeweils in einer der Koordinatenrichtungen eines gegebenen Koordinatensystems, beispielsweise eines kartesischen Koordinatensystems oder eines Polarkoordinatensystems, erfolgen.

Für bereits vorhandene Rechteckobjekte sind prädizierte Lagen der Merkmale bereits in dem vorhergehenden Zyklus ermittelt worden und daher bekannt.

Daher wird in Schritt S14 aus den prädizierten Lagen der Merkmale für ein Rechteckobjekt eine prädizierte Lage des Rechteckobjekts, d.h. des Bezugspunktes des Rechteckobjekts, ermittelt. Dabei sind vier Fälle zu unterscheiden.

Erstens kann das Rechteckobjekt im vorhergehenden Zyklus das erste Mal aufgetreten sein, so dass für dieses noch keine Merkmale ermittelt wurden. Für dieses wird der zuletzt ermittelte Bezugspunkt als Prädiktion verwendet.

Zweitens können für das Rechteckobjekt im vorhergehenden Zyklus zwei Merkmale vorhanden gewesen sein. Beachtet man die Annahme, dass die Längsseiten einer Rechteckobjekts parallel zur Geschwindigkeit des Rechteckobjekts ausgerichtet sein sollen, ergibt sich die prädizierte Lage des Bezugspunktes des Rechteckobjekts $o\text{-}_{obj}$ aus den prädizierten Lagen der Bezugspunkte der Merkmale des Objekts $o\text{-}_L$ bzw. $o\text{-}_B$ für Längs- bzw. Front- oder Heckseiten aus folgenden Gleichungen:

$$\bar{o}_{obj} = \bar{o}_L + \tfrac{1}{2} B_{max} \cdot n_v$$

oder

$$\vec{o}_{obj} = \vec{o}_B + \tfrac{1}{2} L_{max} \cdot e_v,$$

wobei $e_v$ der Einheitsvektor in Richtung der im vorhergehenden Zyklus ermittelten Geschwindigkeit des durch die Merkmale beschriebenen Rechteckobjekts und $n_v$ ein dazu orthogonaler Einheitsvektor in der Abtastebene ist. Weiterhin bezeichnen $B_{max}$ und $L_{max}$ jeweils die maximalen bisher aufgetretenen Werte für die Breite und Länge des Rechteckobjekts. In einer anderen Weiterbildung können auch gewichtete Mittelwerte der rechten Seiten dieser Gleichungen gebildet werden, wobei die im Folgenden beschriebene Gewichtung für die Ermittlung der Geschwindigkeit des Objekts verwendet wird.

Drittens kann im vorhergehenden Zyklus das Rechteckobjekt nur durch seine Längsseite als Merkmal repräsentiert worden sein. In diesem Fall bewegt sich das Rechteckobjekt bzw. der Gegenstand parallel zu der Längsseite. Dann berechnet sich die Lage des Schwerpunkts des Rechteckobjekts über die folgende Formel:

$$\vec{o}_{obj} = \vec{o}_L + \tfrac{1}{2} B_{max} \cdot n_v.$$

Viertens kann im vorhergehenden Zyklus das Rechteckobjekt nur durch seine Front- oder Heckseite als Merkmal repräsentiert worden sein, die demnach orthogonal zu der Geschwindigkeit des entsprechenden Rechteckobjekts ausgerichtet sein muss. Dann berechnet sich die Lage des Schwerpunkts des Rechteckobjekts über die folgende Formel:

$$\vec{o}_{obj} = \vec{o}_B + \tfrac{1}{2} L_{max} \cdot e_v$$

Sind noch keine Geschwindigkeiten für das Rechteckobjekt bzw. dessen Merkmal oder Merkmale ermittelt worden, oder unterschreitet der Betrag der Geschwindigkeit einen vorgegebenen Grenzwert von im Beispiel 10 km/h, unterhalb dessen die Richtung der Geschwindigkeit gegebenenfalls mit sehr großen Fehlern behaftet ist, wird der Winkel $\varphi$ in dem entsprechenden Zustandsvektor verwendet, der den Winkel der Strecke mit der x-Achse des Sensorkoordinatensystems bezeichnet.

In Schritt S16 wird nun ausgehend von den so ermittelten prädizierten Bezugspunkten der Rechteckobjekte eine Segment-Objekt-Zuordnung durchgeführt.

Dazu wird ein Suchbereich ermittelt, in dem nach dem jeweiligen Objekt zuzuordnenden Segmenten gesucht wird. Dies kann mit bekannten Methoden erfolgen. Im Beispiel wird ein Rechteck mit seinem Mittelpunkt in den Bezugspunkt des Rechteckobjekts gelegt, dessen Seiten parallel zu den Seiten bzw. Merkmalen des Rechteckobjekts verlaufen. Die Längen der Seiten ergeben sich im Beispiel als Summe aus den bisher maximal ermittelten Längen $L_{max}$ bzw. Breiten $B_{max}$ und einem in Abhängigkeit von der Kovarianzmatrix des Innovationsvektors, d.h. den Matrizen C und P sowie R im letzten Zyklus ermittelten Summanden

$$s_{L/B} = a\sqrt{\left(CPC^T\right)_{LL/BB} + R_{LL/BB}} + s_{oL/B},$$

wobei a und $s_{oL/B}$ durch Versuche bestimmte Parameter sind. Insbesondere $s_{0A/B}$ kann abhängig von Objekteigenschaften bzw. einer Objektklasse gewählt sein. $R_{LL/BB}$ bezeichnet die Diagonalelemente der Matrix R im Objektkoordinatensystem mit Achsen parallel zu den Seiten des Rechtecks. Entsprechendes gilt für das Matrixprodukt unter der Wurzel.

Ein Segment wird dabei demjenigen Rechteckobjekt zugeordnet, in dessen Suchbereich der geometrische Schwerpunkt des Segments liegt und dessen Bezugspunkt den geringsten Abstand von dem geometrischen Schwerpunkt des Segments hat.

In Schritt S18 wird geprüft, ob für ein Rechteckobjekt wenigstens zwei Segmente gefunden wurden. In diesem Fall werden die dem Rechteckobjekt zugeordneten Segmente zu einem neuen Segment fusioniert.

In Schritt S20 werden dann aus den Segmenten für die Rechteckobjekte jeweils Lagen der Merkmale ermittelt und gleichzeitig die maximalen Längen und/oder Breiten überprüft und gegebenenfalls angepasst.

Dazu wird ausgenutzt, dass die Bildpunkte des Abstandsbildes und damit auch die in den Segmenten in der Reihenfolge zunehmender Polarwinkel gespeichert sind. Ist dies nicht der Fall, kann eine entsprechende Umsortierung jederzeit erfolgen.

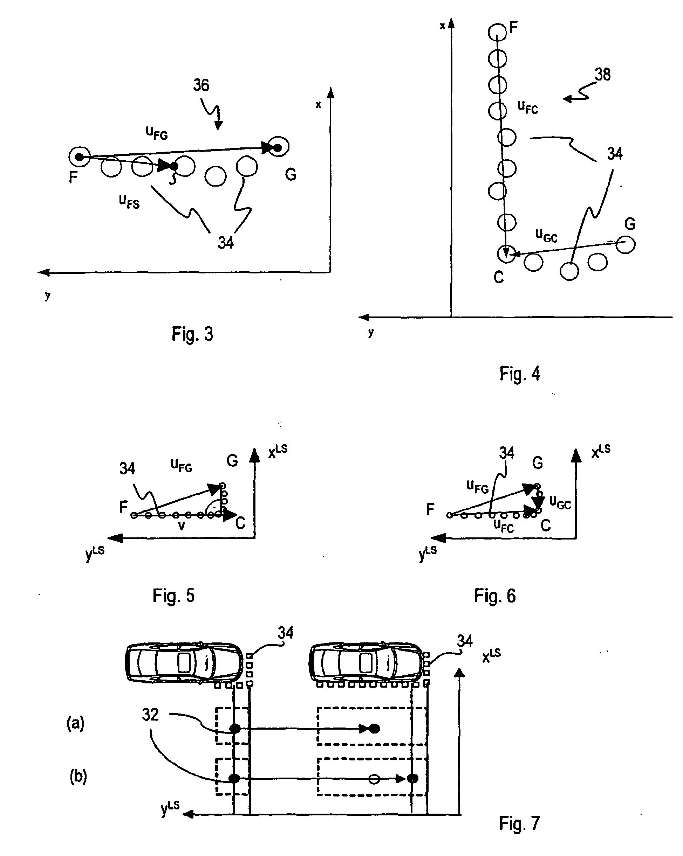

Zunächst wird festgestellt, ob das jeweilige Segment als Strecken- oder Winkelsegment anzusehen ist. Dies ist teilweise in den Figuren 3 und 4 veranschaulicht, in denen durch Kreise Bildpunkte 34 von Segmenten 36 bzw. 38 in dem Sensorkoordinatensystem LS gezeigt sind.

Dazu wird überprüft, ob das Segment mehr als zwei Bildpunkte umfasst. Ist dies nicht der Fall, wird die Merkmalsverfolgung abgebrochen, das Rechteckobjekt in ein sonstiges Objekt umgewandelt und für dieses ein entsprechender Kalman-Filter initialisiert.

Andernfalls wird ein Verbindungsvektor $u_{FG}$ von der Lage des ersten Bildpunkts F des Segments zu dem letzten Bildpunkt G des Segments ermittelt (vgl. Fig. 3). Dann wird ein Verbindungsvektor $u_{FS}$ von der Lage des ersten Bildpunkts zu der Lage des geometrischen Schwerpunkts S des Segments ermittelt. Aus den beiden Verbindungsvektoren kann nun der Abstand des Schwerpunkts zu dem Verbindungsvektor $u_{FL}$ ermittelt werden. Ist dieser Abstand kleiner als ein vorgegebener Grenzwert, der unter anderem durch die Art der verfolgten Gegenstände und das Auflösungsvermögen des Laserscanners 10 bestimmt ist, wird angenommen, dass das Segment eine Gerade bzw. Strecke wiedergibt, also ein Streckensegment ist. Der Grenzwert kann beispielsweise zu 0,3 m gewählt werden.

Andernfalls kann optional geprüft werden, ob das Segment ein Winkelsegment ist (vgl. Fig. 4). Dazu wird zunächst der Bildpunkt C des Segments ermittelt, der den geringsten Abstand zu dem Laserscanner 10 aufweist.

Weiter wird ein Verbindungsvektor $u_{FC}$ von der Lage des ersten Bildpunkts des Segments zu der Lage des Bildpunktes C mit geringstem Abstand von dem Laserscanner 10 ermittelt. Weiterhin wird ein Verbindungsvektor $u_{CG}$ von der Lage des Bildpunktes C mit geringstem Abstand von dem Laserscanner 10 zu dem letzten Bildpunkt G des Segments ermittelt. Aus diesen Verbindungsvektoren wird mit bekannten Formeln der von diesen eingeschlossene Winkel berechnet. Ist der Betrag der Differenz zwischen dem eingeschlossenen Winkel und 90˚ kleiner als ein vorgegebener Winkelgrenzwert, beispielsweise 30˚, so wird angenommen, dass das Segment ein Winkelsegment ist.

Winkelsegmente werden jeweils in zwei Abschnitte bzw. Streckensegmente aufgeteilt, wobei der erste einen Strecke bzw. Schenkel des Winkels darstellender Abschnitt durch die Bildpunkte von dem ersten Bildpunkt F des Segments bis zu dem dem Laserscanner 10 am nächsten liegenden Bildpunkt C des Segments gebildet wird, und der zweite einen Strecke bzw. Schenkel des Winkels darstellender Abschnitt von den Bildpunkten von dem dem Laserscanner 10 am nächsten liegenden Bildpunkt C des Segments bis zu dem letzten Bildpunkt G des Segments.

Danach ist festzustellen, welchem oder welchen Merkmalen das Segment bzw. die Teile des Segments zuzuordnen sind. Insbesondere ist zu ermitteln, ob die Strecke einer Längs- oder einer Front- bzw. Heckseite entspricht.

Hierzu kann zum einen ein Vergleich der Längen der geraden Segmentabschnitte mit den maximalen Längen $L_{max}$ und Breiten $B_{max}$ herangezogen werden.

Bei der Verfolgung von Kraftfahrzeugen wird aber vorzugsweise ausgenutzt, dass die Front- oder Heckseite in guter Näherung orthogonal zu der Geschwindigkeit des Fahrzeugs ist.

Daher wird in dem Fall, dass für ein entsprechendes Rechteckobjekt eine Rechteckobjektgeschwindigkeit, deren Betrag einen vorgegebenen Grenzwert von im Beispiel 10 km/h, unterhalb dessen die Richtung der Geschwindigkeit mit einem großen Fehler behaftet sein kann, überschreitet, für eine einzelne Strecke bzw. ein einzelnes Streckensegment für ein Rechteckobjekt überprüft, ob es näherungsweise parallel oder orthogonal zu dem im letzten Zyklus ermittelten Geschwindigkeitsvektor orientiert ist.

Die aktuelle Länge einer Strecke, die einer Längsseite bzw. der Front- oder Heckseite entspricht, ergibt sich für Rechteckobjekte, die durch nur eine Strecke dargestellt werden, aus der Länge des Vektors $u_{FG}$. Ist sie größer als $L_{max}$ bzw. $B_{max}$ wird der Wert von $L_{max}$ bzw. $B_{max}$ durch den Betrag von $u_{FC}$ ersetzt.

Bei Rechteckobjekten, die durch zwei Strecken dargestellt werden, werden die aktuellen Längen analog ermittelt. Dies ist in den Figuren 5 und 6 veranschaulicht, in denen durch Kreise Bildpunkte 34 von Segmenten in dem Sensorkoordinatensystem LS gezeigt sind. Überschreitet die Objektgeschwindigkeit den oben genannten Grenzwert, können die Länge und Breite aus der Objektgeschwindigkeit und dem Vektor $u_{FG}$ ermittelt werden (vgl. Fig. 5). Andernfalls kann die Ermittlung unter Verwendung der Vektoren $u_{FC}$ bzw. $u_{FG}$ erfolgen (vgl. Fig. 6). Gegebenenfalls werden die maximalen Längen bzw. Breiten entsprechend aktualisiert.

Bei einer Weiterbildung können die Vektoren $u_{FG}$, $u_{FC}$, und $u_{CG}$ jeweils auf der Basis der Mittelwerte der Lagen des ersten, nächsten und letzten Punktes eines Segments mit den jeweiligen Nachbarbildpunkten des Segmentabschnittes berechnet werden.

Die Lagen der Bezugspunkte der durch das Segment bzw. die Segmentabschnitte gegebenen Merkmale werden dann als die Lagen der Mittelpunkte der die Merkmale darstellenden Strecken bzw. Bildpunkte der Segmente ermittelt. Die Messwerte für die Winkel können aus den geschätzten oder prädizierten Geschwindigkeiten der Merkmale, vorzugsweise der Geschwindigkeit des Objekts im vorhergehenden Zyklus, oder an Hand des Verbindungsvektors $u_{FG}$ von der Lage des ersten Bildpunkts und zu der des letzten Bildpunkts des dem Merkmal entsprechenden Streckensegments ermittelt werden.

In Schritt S22 werden aus nicht zugeordneten Segmenten neue Objekte gebildet. Dabei wird ebenfalls eine Untersuchung der Segmente darauf durchgeführt, ob diese Strecken- oder Winkelsegmente darstellen, wozu die oben geschilderte Vorgehensweise verwendet wird. Für Strecken- oder Winkelsegmente werden Rechteckobjekte gebildet, die allerdings für eine Anfangsphase von wenigstens einem Zyklus, d.h. wenigstens den nächsten Zyklus, nur mit einem gewöhnlichen Kalman-Filter für die Bewegung des geometrischen Schwerpunkts des Rechteckobjekts verfolgt werden.

In Schritt S24 werden dann für die Merkmale getrennt voneinander die Innovationsvektoren für die Zustandsvektoren der Merkmale und sonstigen Objekte ermittelt, wozu die oben angegebene Gleichung verwendet wird. Insbesondere werden auch getrennt nach Merkmalen a posteriori Schätzungen für die Lagen und Geschwindigkeiten der Merkmale ermittelt.

Tritt ein neues Merkmal auf, wird ein neuer Kalman-Filter für dieses initialisiert, wozu die Geschwindigkeitsinformation und die Unsicherheitsinformation verwendet werden, die für das verfolgte Merkmal erhalten wird.

In einer bevorzugten Variante werden bei der Innovation und nur bei dieser statt der Mittelpunkte der Strecken zur Berücksichtigung von Längenänderungen von Strecken, die beispielsweise durch Verdeckungen entstehen können, andere Bezugspunktlagen verwendet. Dieser Schritt wird nur bei einer drastischen Längen- bzw. Breitenänderung einer Strecke durchgeführt. In Fig. 7 ist schematisch das Problem veranschaulicht, in der ein Fahrzeug in zwei aufeinander folgenden Zyklen und die jeweils für dieses erfassten Bildpunkte gezeigt sind. Dadurch, dass von dem Objekt zunächst nur wenige und dann viele Bildpunkte entlang der Längsseite erfasst wurden, ändert sich die scheinbare Länge des Objekts. In Fig. 7 wird der Punkt 32 als Bezugspunkt für das Objekt verwendet. Wird keine Längenkorrektur durchgeführt erscheint die Bewegung des Bezugspunkts der Längsseite und des Bezugspunktes des Objekts verkürzt, so dass die Geschwindigkeit große Fehler aufweist (vgl. (a) in Fig. 7). Die richtige Verschiebung ist wesentlich größer (vgl. (b) in Fig. 7). Es werden daher nur zur Berechnung des Innovationsvektors folgende Formeln für die verwendete gemessene Lage $o^{mess}_{L/B}$ für Strecken für Längsseiten bzw. Front- oder Heckseiten verwendet, in denen $O_{max}$ jeweils $L_{max}$ bzw. $B_{max}$ entsprechend bezeichnet und d die aus den Streckensegmenten ermittelte aktuelle Länge ist:

$$o^{mess}_{L/B} = f_{L/B} + (d - \frac{O_{max}}{2}) \cdot \frac{1}{|u_{FC}|} u_{FC} \quad \text{,falls} \quad u_{FC} \parallel v$$

$$o^{mess}_{L/B} = f_{L/B} + (d - \frac{O_{max}}{2}) \cdot \frac{1}{|u_{GC}|} u_{GC} \quad \text{,falls} \quad u_{GC} \parallel v$$

$$o^{mess}_{L} = c_{L} + \frac{L_{max}}{2} \cdot e_{CF/G} \quad \text{,falls} \quad u_{FG} \parallel v$$

$$o^{mess}_{B} = c_{B} + \frac{B_{max}}{2} \cdot n_{CF/G} \quad \text{,falls} \quad u_{FG} \perp v$$

Die ersten beiden Gleichungen gelten für Objekte, die durch einen Winkel bzw. zwei Strecken gegeben sind. Die letzten beiden Gleichungen beziehen sich auf Objekte, die durch nur eine Strecke als Merkmal gegeben sind. Eine Änderung wird hier nur durchgeführt, wenn einer der Endpunkte der Strecke zugleich der dem Laserscanner 10 nächste Bildpunkt ist. Dann bezeichnen $e_{CF/G}$ und $n_{CF/G}$ Einheitsvektoren parallel und orthogonal zu $u_{CF/G}$, die von dem nächsten Punkt C zu dem anderen Endpunkt führen, $f_{L/B}$ Ortsvektoren zu den Lagen der ersten Bildpunkte der Strecke und $c_{L}$ bzw. $c_{B}$ Ortsvektoren zu den dem Laserscanner nächsten Lagen der Bildpunkte für die jeweilige die Längsseite bzw. Front- oder Heckseite darstellende Strecke.

Für Rechteckobjekte, die über eine Anfangsphase, d.h. seit mindestens zwei Zyklen verfolgt wurden, werden entsprechende Merkmalsverfolgungen initialisiert, wobei zur Festlegung von Längsseiten und Front- bzw. Heckseiten die mit der üblichen Objektverfolgung ermittelten Geschwindigkeiten für das Objekt verwendet werden. Die normale Objektverfolgung für Rechteckobjekte wird dann eingestellt.

Wird ein Merkmal in dem aktuellen Zyklus nicht gefunden, wird die entsprechende Verfolgung eingestellt.

In Schritt S26 werden zum einen Werte für die aktuellen Lagen der Rechteckobjekte aus den Lagen der Merkmale ermittelt, wozu die gleiche Vorgehensweise verwendet wird, wie bei der Berechnung der prädizierten Lagen der Objekte aus den prädizierten Lagen der Merkmale.

Weiterhin werden Objektgeschwindigkeiten berechnet.

Dazu werden bei Rechteckobjekten, die durch nur ein Merkmal gegeben sind, die entsprechenden Ergebnisse für die Geschwindigkeit in der a posteriori-Schätzung der Zustandsvektoren verwendet.

Bei Rechteckobjekten, für die zwei Merkmale verfolgbar sind, wird ein gewichteter Mittelwert der Geschwindigkeit in der a posteriori-Schätzung der entsprechenden Zustandsvektoren verwendet. Die Gewichtsfaktoren werden dabei anhand der Innovationsvektoren bestimmt, die als ein Maß für die Güte bzw. Genauigkeit der Geschwindigkeit angesehen werden können: je kleiner der Betrag des Innovationsvektors ist, desto größer ist die Genauigkeit der Schätzung. Daher wird folgende Formel für Schätzung den Geschwindigkeitsvektor v des Objekts im Zyklus k verwendet:

$$v(k) = g(k) \cdot v^B(k) + (1 - g(k)) \cdot v^B(k).$$

Dabei bezeichnen $v^B$ und $v^L$ die a posteriori-Schätzungen für die Geschwindigkeitsvektoren für die Merkmale Front- oder Heckseite bzw. Längsseite. Das Gewicht g ergibt sich dabei aus den Betragsquadraten der Geschwindigkeitskomponenten der Innovationsvektoren $(a_{vx}^B, a_{vy}^B)$ für die Front- bzw. Heckseiten und $(a_{vx}^H, a_{vy}^H)$ für die Längsseiten

$$g(k) = \frac{g^B(k)}{g^B(k) + g^L(k)}$$

mit

$$g^{B/L}(k) = a_{vx}^{B/L}(k)^2 + a_{vy}^{B/L}(k)^2 ,$$

Die Werte für Lagen und Geschwindigkeiten der Objekte werden dann zur weiteren Verwendung ausgegeben und/oder gespeichert.

In Schritt S28 werden getrennt voneinander Lagen der Bezugspunkte der Merkmale in dem folgenden Zyklus prädiziert.

Danach kann das Verfahren mit der Erfassung bzw. dem Einlesen eines neuen Abstandsbildes, d.h. Schritt S10 fortgesetzt werden.

Bei einem Vergleich der Resultate des beschriebenen Verfahrens mit denen eines gewöhnlichen Verfahrens, bei dem Objekte auf der Basis ihres geometrischen Schwerpunkts verfolgt werden, für eine simulierte Verkehrsituation ergaben sich durch die dreifache Standardabweichung definierte Fehler für die ermittelten Objektgeschwindigkeiten von 0,3 km/h für das hier beschriebene Verfahren gegenüber 7,7 km/h für das gewöhnliche Verfahren. Dies stellt eine signifikante Verbesserung der Genauigkeit dar.

Bei einer weiteren bevorzugten Ausführungsform der Erfindung wird ein Laserscanner verwendet, der Abtastungen in vier Abtastebenen durchführt. Bei der Auswertung werden die Bildpunkte in den vier Ebenen auf eine gemeinsame Ebene projiziert und das so erhaltene Abstandsbild wird wie zuvor geschildert weiterverarbeitet.

Bezugszeichenliste

| 10 | Laserscanner |
| 12 | Fahrzeug |
| 14 | Erfassungsbereich |
| 16 | Gegenstand |
| 18 | Gegenstand |
| 20 | Laserstrahlbündel |
| 22 | Gegenstandspunkt |
| 24 | Datenverarbeitungseinrichtung |
| 26 | Längsseite |
| 28 | Frontseite |
| 30 | Längsseite |
| 32 | Bezugspunkt |
| 34 | Bildpunkte |
| 36 | Segment |
| 38 | Segment |

**EP 1 531 343 B1**

**Patentansprüche**

1. Verfahren zur Verfolgung von Objekten (16, 18), die von wenigstens einem Sensor (10) für elektromagnetische Strahlung, insbesondere einem Laserscanner, erfassten Gegenständen (16, 18) in einem Erfassungsbereich (14) des Sensors (10) entsprechen, auf der Basis von in zeitlicher Folge von dem Sensor (10) erfassten Abstandsbildern des Erfassungsbereichs (14), bei dem in aufeinanderfolgenden Zyklen
wenigstens nach einer Anfangsphase wenigstens zwei auf der Basis der Abstandsbilder ermittelbare Merkmale (26, 28, 30) wenigstens eines Gegenstands (16, 18) bzw. des diesem entsprechenden Objekts (16, 18) wenigstens während solcher aufeinanderfolgender Zyklen, in denen die Merkmale (26, 28, 30) in den Zyklen erfassbar sind, insoweit getrennt voneinander verfolgt werden, als in einem aktuellen Zyklus zumindest die Prädiktion von Lagen und/oder Geschwindigkeiten der Merkmale (26, 28, 30) und die Ermittlung von Schätzwerten für die Geschwindigkeiten der Merkmale (26, 28, 30) bei gegebenen aktuellen Lagen der Merkmale (26, 28, 30) getrennt voneinander durchgeführt werden, und
auf der Basis der Ergebnisse der Verfolgung der Merkmale (26, 28, 30) wenigstens eine Lage und/oder Geschwindigkeit des Objekts (16, 18) bzw. des diesem entsprechenden Gegenstands (16, 18) ermittelt wird,
**dadurch gekennzeichnet,**
**dass** für einen Gegenstand (16, 18), der in dem Erfassungsbereich (14) eine näherungsweise rechteckige Kontur aufweist, als Merkmale (26, 28, 30) zwei im Wesentlichen zueinander orthogonale Seiten des Gegenstands (16, 18) verwendet werden.

2. Verfahren nach Anspruch 1,
**dadurch gekennzeichnet,**
**dass** wenigstens eines der Merkmale (26, 28, 30) einen charakteristischen Konturabschnitt eines Gegenstandes in dem Erfassungsbereich (14) betrifft.

3. Verfahren nach einem der vorhergehenden Ansprüche,
**dadurch gekennzeichnet,**
**dass** wenigstens ein Merkmal (26, 28, 30) für den Gegenstand (16, 18) verwendet wird, das durch Unterschiede in der Reflektivität verschiedener von dem Sensor (10) erfassbarer Bereiche gegeben ist.

4. Verfahren nach einem der vorhergehenden Ansprüche,
**dadurch gekennzeichnet,**
**dass** die Ermittlungen der aktuellen Lagen zweier Merkmale (26, 28, 30) desselben Objekts (16, 18) bzw. Gegenstands (16, 18) aus einem aktuellen Abstandsbild in einem aktuellen Zyklus getrennt voneinander erfolgen.

5. Verfahren nach einem der Ansprüche 1 bis 3,
**dadurch gekennzeichnet,**
**dass** in einem vorhergehenden Zyklus für wenigstens zwei Merkmale (26, 28, 30) desselben Objekts (16, 18) Lagen der Merkmale (26, 28, 30) in einem aktuellen Zyklus prädiziert werden,
**dass** aus den prädizierten Lagen der Merkmale (26, 28, 30) des Objekts (16, 18) eine prädizierte Lage des Objekts (16, 18) ermittelt wird,
**dass** dem Objekt auf der Basis der prädizierten Lage des Objekts (16, 18) Bildpunkte (36) des aktuellen Abstandsbildes zugeordnet werden, und
**dass** aktuelle Lagen der Merkmale (26, 28, 30) in dem aktuellen Zyklus auf der Basis der zugeordneten Bildpunkte (36) ermittelt werden.

6. Verfahren nach einem der vorhergehenden Ansprüche,
**dadurch gekennzeichnet,**
**dass** die Abstandsbilder segmentiert werden,
**dass** in dem Fall, dass mehrere Segmente (36, 38) einem Objekt zuzuordnen sind, die Segmente (36, 38) zu einem neuen Segment zusammengefasst werden.

7. Verfahren nach einem der vorhergehenden Ansprüche,
**dadurch gekennzeichnet,**
**dass** die Abstandsbilder segmentiert werden,
**dass** geprüft wird, ob zwei Merkmale (26, 28, 30) für ein Objekt in einem Segment (38) enthalten sind, und
**dass** für die unabhängige Verfolgung der Merkmale (26, 28, 30) nur entsprechende Teile eines Segments (36, 38) verwendet werden.

8. Verfahren nach Anspruch 6 oder 7,
**dadurch gekennzeichnet,**
**dass** zur Zuordnung wenigstens eines Merkmals (26, 28, 30) eines Gegenstands (16, 18), das sich erfahrungsgemäß in einer vorgegebenen Richtung relativ zu dem Merkmal (26, 28, 30) oder einem anderen Merkmal (26, 28, 30) bewegt, und Teilen eines Segments (38) in einem aktuellen Zyklus die ermittelte aktuelle Lage bzw. Orientierung des Merkmals (26, 28, 30) relativ zu der Geschwindigkeit des Merkmals (26, 28, 30) verwendet wird.

9. Verfahren nach einem der vorhergehenden Ansprüche,
**dadurch gekennzeichnet,**
**dass** die Geschwindigkeit eines Objekts (16, 18) als gewichteter Mittelwert der Geschwindigkeiten der Merkmale (26, 28, 30) für das Objekt ermittelt wird.

10. Verfahren nach einem der vorhergehenden Ansprüche,
**dadurch gekennzeichnet,**
**dass** zur Verfolgung der Merkmale (26, 28, 30) zunächst Lagen der Merkmale (26, 28, 30) prädiziert werden,
**dass** nach einer Ermittlung der Merkmale (26, 28, 30) in einem aktuellen Abstandsbild in Abhängigkeit von den entsprechenden prädizierten Lagen eine aktuelle Lage des Merkmals (26, 28, 30) ermittelt oder geschätzt wird, und
**dass** zur Ermittlung der Geschwindigkeit des Objekts (16, 18) die Geschwindigkeit eines Merkmals (26, 28, 30) stärker gegenüber der Geschwindigkeit des anderen Merkmals (26, 28, 30) gewichtet wird, bei dem die Abweichungen zwischen der prädizierten Lage des Merkmals (26, 28, 30) und der auf der Basis eines aktuellen Abstandsbildes ermittelten Lage des Merkmals (26, 28, 30) kleiner ist als bei dem anderen Merkmal (26, 28, 30).

11. Verfahren nach einem der vorhergehenden Ansprüche,
**dadurch gekennzeichnet,**
**dass** die Bezugspunkte von linearen Merkmalen (26, 28, 30) Mittelpunkte der diese darstellenden Strecken sind.

12. Verfahren nach einem der vorhergehenden Ansprüche,
**dadurch gekennzeichnet,**
**dass** in dem Fall, dass ein erstes von wenigstens zwei Merkmalen (26, 28, 30) in einem aktuellen Zyklus nicht in dem aktuellen Abstandsbild erkennbar ist, die Verfolgung des ersten Merkmals (26, 28, 30) abgebrochen wird.

13. Verfahren nach einem der vorhergehenden Ansprüche,
**dadurch gekennzeichnet,**
**dass** in dem Fall, dass bei einer Verfolgung eines Objekts (16, 18) anhand wenigstens eines Merkmals (26, 28, 30) in einem aktuellen Zyklus ein weiteres Merkmal (26, 28, 30) erkannt wird, dieses weitere Merkmal (26, 28, 30) ebenfalls verfolgt wird, wobei zur Initialisierung die Ergebnisse der Verfolgung des wenigstens einen Merkmals (26, 28, 30) verwendet werden.

14. Verfahren nach einem der vorhergehenden Ansprüche,
**dadurch gekennzeichnet,**
**dass** ein Objekt nach einem ersten Auffinden zunächst für wenigstens einen weiteren Zyklus mit einem Objektverfolgungsverfahren verfolgt wird, und dass die Ergebnisse dieser Objektverfolgung zur Initialisierung der Merkmalsverfolgung genutzt werden.

15. Verfahren nach einem der vorhergehenden Ansprüche,
**dadurch gekennzeichnet,**
**dass** aus einem aktuellen Abstandsbild aktuelle Lagen für wenigstens zwei Merkmale (26, 28, 30) desselben Objekts (16, 18) ermittelt werden, und
**dass** eine Schätzung wenigstens der Lagen der Merkmale (26, 28, 30) auf der Basis der prädizierten Lagen und der ermittelten aktuellen Lagen für die Merkmale (26, 28, 30) unabhängig voneinander erfolgt.

16. Computerprogramm mit Programmcode-Mitteln, um das Verfahren nach einem der Ansprüche 1 bis 15 durchzuführen, wenn das Programm auf einem Computer ausgeführt wird.

17. Computerprogrammprodukt mit Programmcode-Mitteln, die auf einem computerlesbaren Datenträger gespeichert sind, um das Verfahren nach einem der Ansprüche 1 bis 15 durchzuführen, wenn das Computerprogrammprodukt auf einem Computer ausgeführt wird.

**18.** Vorrichtung zur Erkennung und Verfolgung von Objekten (16, 18); die von wenigstens einem Sensor (10) erfassten Gegenständen (16, 18) in einem Erfassungsbereich (14) des Sensors (10) entsprechen, mit mindestens einem optoelektronischen Sensor (10), vorzugsweise einem Laserscanner (10), dessen Sichtbereich den Erfassungsbereich (14) einschließt, und einer mit dem optoelektronischen Sensor (10) verbundenen Datenverarbeitungseinrichtung (24), sowie

Mittel zur voneinander getrennten Verfolgung wenigstens zweier auf der Basis der Abstandsbilder ermittelbaren Merkmale (26, 28, 30) wenigstens eines Gegenstands (16) bzw. des diesem entsprechenden Objekts (16, 18) wenigstens nach einer Anfangsphase wenigstens während solcher aufeinanderfolgender Zyklen, in denen die Merkmale (26, 28, 30) in den Zyklen erfassbar sind, insoweit, als in einem aktuellen Zyklus zumindest die Prädiktion von Lagen und/oder Geschwindigkeiten der Merkmale (26, 28, 30) und die Ermittlung von Schätzwerten für die Geschwindigkeiten der Merkmale (26, 28, 30) bei gegebenen aktuellen Lagen der Merkmale (26 28, 30) getrennt voneinander durchgeführt werden, und Mittel zur Ermittlung wenigstens einer Lage und/oder Geschwindigkeit des Objekts (16, 18) bzw. des diesem entsprechenden Gegenstands (16, 18) auf der Basis der Ergebnisse der Verfolgung der Merkmale (26, 28, 30)**dadurch gekennzeichnet, daß** für einen Gegenstand (16, 18), der in dem Erfassungsbereich (14) eine näherungsweise rechteckige Kontur aufweist, als Merkmale (26, 28, 30) zwei im Wesentlichen zueinander orthogonale Seiten des Gegenstands (16, 18) verwendet werden.

**Claims**

**1.** A method of tracking objects (16, 18) which correspond to real objects (16, 18) detected by at least one sensor (10) for electromagnetic radiation, in particular by a laser scanner, in a detection zone (14) of the sensor (10) on the basis of spatial separation images of the detection zone (14) detected in time sequence by the sensor (10), wherein, in cycles following one another,

at least after a starting phase, at least two features (26, 28, 30) of at least one real object (16, 18) or of the object (16, 18) corresponding thereto are tracked, said features being determined on the basis of the spatial separation image, at least during such cycles following one another in which the features (26, 28, 30) can be detected in the cycles, separately from one another to the extent that, in a current cycle, at least the prediction of positions and/or speeds of the features (26, 28, 30) and the determination of estimated values for the speeds of the features (26, 28, 30) with given current positions of the features (26, 28, 30) are carried out separately from one another; and

at least one position and/or speed of the object (16, 18) or of the real object (16, 18) corresponding thereto is determined on the basis of the results of the tracking of the features (26, 28, 30), **characterised in that**

two sides of the real object (16, 18) substantially orthogonal to one another are used as features (26, 28, 30) for a real object (16, 18) which has an approximately rectangular contour in the detection zone (14).

**2.** A method in accordance with claim 1,
**characterised in that**
at least one of the features (26, 28, 30) relates to a characteristic contour section of a real object in the detection zone (14).

**3.** A method in accordance with one of the preceding claims,
**characterised in that**
at least one feature (26, 28, 30) is used for the real object (16, 18) and is defined by differences in the reflectivity of different regions detectable by the sensor (10).

**4.** A method in accordance with any one of the preceding claims,
**characterised in that**
the determinations of the current positions of two features (26, 28, 30) of the same object (16, 18) or real object (16, 18) from a current spatial separation image take place separately from one another in a current cycle.

**5.** A method in accordance with any one of the claims 1 to 3,
**characterised in that**
positions of the features (26, 28, 30) in a current cycle are predicted in a preceding cycle for at least two features (26, 28, 30) of the same object (16, 18);
**in that** a predicted position of the object (16, 18) is determined from the predicted positions of the features (26, 28, 30) of the object (16, 18);
**in that** picture elements (36) of the current spatial separation image are associated with the object on the basis of the predicted position of the object; and

**in that** current positions of the features (26, 28, 30) in the current cycle are determined on the basis of the associated picture elements (36).

**6.** A method in accordance with any one of the preceding claims,
**characterised in that**
the spatial separation images are segmented;
**in that**, in the case that a plurality of segments (36, 38) are associated with an object, the segments (36, 38) are combined to form a new segment.

**7.** A method in accordance with any one of the preceding claims,
**characterised in that**
the spatial separation images are segmented;
**in that** a check is made whether two features (26, 28, 30) for an object are contained in a segment (38); and
**in that** only corresponding parts of a segment (36, 38) are used for the independent tracking of the features (26, 28, 30).

**8.** A method in accordance with claim 6 or claim 7,
**characterised in that**
the determined current position or orientation of the feature (26, 28, 30) relative to the speed of the feature (26, 38, 30) in a current cycle is used for associating at least one feature (28, 38, 30) of a real object (16, 18) which experience has shown moves in a predefined direction relative to the feature (26, 28, 30) or relative to another feature (26, 28, 30) and of parts of a segment (38).

**9.** A method in accordance with any one of the preceding claims,
**characterised in that**
the speed of an object (16, 18) is determined as a weighted mean value of the speeds of the features (26, 28, 30) for the object.

**10.** A method in accordance with any one of the preceding claims,
**characterised in that**
positions of the features (26, 28, 30) are initially predicted for tracking the features (26, 28, 30);
**in that**, after a determination of the features (26, 28, 30) in a current spatial separation image in dependence on the corresponding predicted positions, a current position of the feature (26, 28, 30) is determined or estimated; and
**in that**, for determining the speed of the object (16, 18), the speed of one feature (26, 28, 30) is given greater weight over the speed of the other feature (26, 28, 30), wherein the deviations between the predicted position of the feature (26, 28, 30) and the position of the feature (26, 28, 30) determined on in basis of a current spatial separation image is smaller than with the other feature (26, 28, 30).

**11.** A method in accordance with any one of the preceding claims,
**characterised in that**
the reference points of linear features (26, 28, 30) are centre points of the paths representing them.

**12.** A method in accordance with any one of the preceding claims,
**characterised in that**,
in the case that a first of at least two features (26, 28, 30) in a current cycle cannot be recognised in the current spatial separation image, the tracking of the first feature (26, 28, 30) is aborted.

**13.** A method in accordance with any one of the preceding claims,
**characterised in that**,
in the case that a further feature (26, 28, 30) is recognised on a tracking of an object (16, 18) with reference to at least one feature (26, 38, 430) in a current cycle, this further feature (26, 28, 30) is likewise tracked, with the results of the tracking of the at least one feature (26, 28, 30) being used for the initialisation.

**14.** A method in accordance with any one of the preceding claims,
**characterised in that**
an object is initially tracked after a first locating for at least one further cycle using an object tracking process; and
**in that** the results of this object tracking are utilised for initialising the feature tracking.

**15.** A method in accordance with any one of the preceding claims,
**characterised in that**
current positions for at least two features (26, 28, 30) of the same object (16, 18) are determined from a current spatial separation image; and
**in that** an estimate of at least the positions of the features (26, 28, 30) takes place on the basis of the predicted positions and of the determined current positions for the features (26, 28, 30) independently of one another.

**16.** A computer program with program code means to carry out the method in accordance with any one of the claims 1 to 15, when the program is installed on a computer.

**17.** A computer program product with program code means which are stored on a computer legible data carrier to carry out the method in accordance with any one of the claims 1 to 15, when the computer program product is installed on a computer.

**18.** An apparatus for recognising and tracking objects (16, 18) which correspond to real objects (16, 18) detected by at least one sensor (10) in a detection zone (14) of the sensor, having at least one optoelectronic sensor (10), preferably a laser scanner (10), whose range of view includes the detection zone (14), and having a data processing device (24) connected to the optoelectronic sensor (10) as well as means for the tracking separately from one another of at least two features (26, 28, 30) of at least one real object (16) or of the object (16, 18) corresponding thereto, said features being able to be determined on the basis of the spatial separation image, at least after a starting phase at least during such cycles following one another in which the features (26, 28, 30) can be detected in the cycles to the extent that at least the prediction of positions and/or speeds of the features (26, 28, 30) and the determination of estimated values for the speeds of the features (26, 28, 30) are carried out separately from one another with defined current positions of the features (26, 38, 30) in a current cycle, and means for determining at least one position and/or speed of the object (16, 18) or of the real object (16, 18) corresponding thereto on the basis of the results of the tracking of the features (26, 23, 30), **characterised in that** two sides of the real object (16, 18) substantially orthogonal to one another are used as features (26, 28, 30) for a real object (16, 18) which has an approximately rectangular contour in the detection zone (14).

**Revendications**

**1.** Procédé pour le suivi d'objets (16, 18), qui correspondent à des articles (16, 18) détectés par au moins un capteur (10) pour rayonnement électromagnétique, en particulier un scanneur à laser, dans une zone de détection (14) du capteur (10) en se basant sur des images de distance, prises en succession temporelle par le capteur (10), de la zone de détection (14),
dans lequel, dans des cycles successifs
au moins après une phase initiale, au moins deux caractéristiques (26, 28, 30), susceptibles d'être déterminées en se basant sur les images de distance, d'au moins un article (16, 18) ou respectivement de l'objet correspondant à celui-ci (16, 18) peuvent être suivies, au moins pendant ceux des cycles successifs dans lesquels les caractéristiques (26, 28, 30) peuvent être détectées dans les cycles, indépendamment les unes des autres, dans la mesure où l'on exécute, dans un cycle actuel, au moins la prédiction de situations et/ou de vitesses des caractéristiques (26, 28, 30) et la détermination de valeurs estimatives pour les vitesses des caractéristiques (26, 28, 30) pour des situations actuelles données des caractéristiques (26, 28, 30), séparément les unes des autres, et
en se basant sur les résultats du suivi des caractéristiques (26, 28, 30) on détermine au moins une situation et/ou une vitesse de l'objet (16,18) ou respectivement de l'article correspondant à celui-ci (16, 18), **caractérisé en ce que** pour un article (16, 18) qui présente dans la zone de détection (14) un contour approximativement rectangulaire, on utilise comme caractéristiques (26, 28, 30) au moins deux côtés de l'article (16, 18) sensiblement perpendiculaires l'un à l'autre.

**2.** Procédé selon la revendication 1,
**caractérisé en ce que** l'une au moins des caractéristiques (26, 28, 30) concerne un tronçon de contour caractéristiques d'un article dans la zone de détection (14).

**3.** Procédé selon l'une des revendications précédentes,
**caractérisé en ce que** l'on utilise pour l'article (16, 18) au moins une caractéristique (26, 28, 30) qui existe du fait de différence dans la réflectivité de différentes régions capables d'être détectées par le capteur (10).

**4.** Procédé selon l'une des revendications précédentes,
**caractérisé en ce que** les déterminations des situations actuelles de deux caractéristiques (26, 28, 30) du même objet (16, 18) ou respectivement du même article (16, 18) ont lieu de manière séparée l'une de l'autre à partir d'une image de distance actuelle dans un cycle actuel.

**5.** Procédé selon l'une des revendications 1 à 3,
**caractérisé en ce que**
dans un cycle précédent on effectue pour au moins deux caractéristiques (26, 28, 30) du même objet (16, 18) des prédictions pour des situations des caractéristiques (26, 28, 30) dans un cycle actuel,
**en ce que** l'on détermine à partir des situations prédites des caractéristiques (26, 28, 30) de l'objet (16, 18), une situation prédite de l'objet (16, 18),
**en ce que** l'on attribue à l'objet, en se basant sur la situation prédite de l'objet (16, 18), des points image (36) de l'image de distance actuelle, et **en ce que** l'on détermine des situations actuelles des caractéristiques (26, 28, 30) dans le cycle actuel en se basant sur les points image attribués (36).

**6.** Procédé selon l'une des revendications précédentes,
**caractérisé en ce que**
les images de distance sont segmentées,
dans le cas ou plusieurs segments (36, 38) doivent être attribués à un objet, les segments (36, 38) sont regroupés en un nouveau segment.

**7.** Procédé selon l'une des revendications précédentes,
**caractérisé en ce que**
les images de distance sont segmentées,
on vérifie si deux caractéristiques (26, 28, 30) pour un objet sont contenues dans un segment (38), et
pour le suivi indépendant des caractéristiques (26, 28, 30) on utilise uniquement des parties correspondantes d'un segment (36, 38).

**8.** Procédé selon la revendication 6 ou 7,
**caractérisé en ce que** pour l'attribution d'au moins une caractéristique (26, 28, 30) d'un article (16, 18), qui se déplace de façon connue dans une direction prédéterminée par rapport à la caractéristique (26, 28, 30) ou par rapport à une autre caractéristique (26, 28, 30), à des parties d'un segment (38) dans un cycle actuel, on utilise la situation ou l'orientation actuelle déterminée de la caractéristique (26, 28, 30) par rapport aux vitesses de la caractéristique (26, 28, 30).

**9.** Procédé selon l'une des revendications précédentes,
**caractérisé en ce que** la vitesse d'un objet (16, 18) est déterminée comme valeur moyenne pondérée des vitesses des caractéristiques (26, 28, 30) pour l'objet.

**10.** Procédé selon l'une des revendications précédentes,
**caractérisé en ce que**
pour le suivi des caractéristiques (26, 28, 30) ont prédit tout d'abord des situations des caractéristiques (26, 28, 30), après une détermination des caractéristiques (26, 28, 30) on détermine ou on estime, dans une image de distance actuelle et en fonction des situations prédites correspondantes, une situation actuelle de la caractéristique (26, 28, 30), et
pour la détermination de la vitesse de l'objet (16, 18) on pondère la vitesse d'une caractéristique (26, 28, 30) plus fortement par rapport à la vitesse de l'autre caractéristiques (26, 28, 30) pour laquelle l'écart entre la situation prédite de la caractéristique (26, 28, 30) et la situation, déterminée en se basant sur une image de distance actuelle, de la caractéristique (26, 28, 30) est plus faible que pour l'autre caractéristique (26, 28, 30).

**11.** Procédé selon l'une des revendications précédentes,
**caractérisé en ce que** les points de référence de caractéristiques linéaires (26, 28, 30) sont les centres des segments qui les représentent.

**12.** Procédé selon l'une des revendications précédentes,
**caractérisé en ce que**, dans le cas où une première d'au moins deux caractéristiques (26, 28, 30) dans un cycle actuel ne peut pas être reconnue dans l'image de distance actuelle, le suivi de la première caractéristique (26, 28, 30) est interrompu.

**13.** Procédé selon l'une des revendications précédentes,
**caractérisé en ce que**, dans le cas où, lors du suivi d'un objet (16, 18) à l'aide d'au moins une caractéristique (26, 28, 30) dans un cycle actuel on reconnaît une autre caractéristique (26, 28, 30), on effectue également un suivi de cette autre caractéristique (26, 28, 30), et pour l'initialisation on utilise des résultats du suivi de ladite au moins une caractéristique (26, 28, 30).

**14.** Procédé selon l'une des revendications précédentes,
**caractérisé en ce que**, après l'avoir trouvé une première fois, on effectue le suivi d'un objet tout d'abord pour au moins un autre cycle avec une procédure de suivi d'objet, et **en ce que** les résultats de ce suivi d'objet sont utilisés pour initialiser le suivi de caractéristiques.

**15.** Procédé selon l'une des revendications précédentes,
**caractérisé en ce que**
à partir d'une image de distance actuelle on détermine des situations actuelles pour au moins deux caractéristiques (26, 28, 30) du même objet (16, 18), et
on effectue une estimation au moins des situations des caractéristiques (26, 28, 30), en se basant sur les situations prédites et les situations actuelles déterminées pour les caractéristiques (26, 28, 30), indépendamment les unes des autres.

**16.** Programme d'ordinateur avec des moyens formant code de programme, pour mettre en oeuvre le procédé selon l'une des revendications 1 à 15 quand le programme est exécuté sur un ordinateur.

**17.** Produit de programme d'ordinateur comprenant des moyens formant code de programme qui sont mémorisés sur un support de données lisible à l'ordinateur, afin de mettre en oeuvre le procédé selon l'une des revendications 1 à 15 quand le produit de programme d'ordinateur est exécuté sur un ordinateur.

**18.** Appareil pour la reconnaissance et le suivi d'objets (16, 18), qui correspondent à des articles (16, 18), détectés par au moins un capteur (10), dans une zone de détection (14) du capteur (10), comprenant au moins un capteur optoélectronique, de préférence un scanneur à laser (10), dont la zone de vision inclut la zone de détection (14), et un système de traitement de données (24) connecté au capteur optoélectronique (10), ainsi que des moyens pour le suivi séparé d'au moins deux caractéristiques (26, 28, 30) capables d'être déterminées en se basant sur des images de distance, d'au moins un article (16) ou de l'objet (16, 18) correspondant à celui-ci, au moins après une phase initiale et au moins pendant ceux des cycles successifs dans lesquels les caractéristiques (26, 28, 30) peuvent être détectées dans les cycles, dans la mesure où on exécute dans un cycle actuel au moins la prédiction de situations et/ou de vitesses des caractéristiques (26, 28, 30) et la détermination de valeur estimative pour les vitesses des caractéristiques (26, 28, 30) pour des situations actuelles données des caractéristiques (26, 28, 30) séparément les unes des autres, et des moyens pour déterminer au moins une situation et/ou une vitesse de l'objet (16, 18) ou respectivement de l'article (16, 18) correspondant à celui-ci en se basant sur les résultats du suivi des caractéristiques (26, 28, 30), **caractérisé en ce que**, pour un article (16, 18), qui présente dans la zone de détection (14) un contour approximativement rectangulaire, l'appareil utilise comme caractéristiques (26, 28, 30) deux côtés sensiblement perpendiculaires l'un à l'autre de l'article (16, 18).

Fig. 1

EP 1 531 343 B1

Einlesen eines aktuellen
Abstandsbildes — S10

Segmentierung — S12

Ermittlung einer prädizierten
Lage des Objekts — S14

Ermittlung der dem Objekt
zuzuordnenden Segmente — S16

Segmentfusion — S18

Ermittlung der aktuellen Lagen der Merkmale
und der maximalen Länge und Breiten — S20

Bildung neuer Objekte — S22

Ermittlung der Innovationsvektoren — S24

Ermittlung und Ausgabe von
Objektlagen und -geschwindigkeiten — S26

Prädiktion, insbesondere der Lagen
von Merkmalen — S28

Fig. 2

Fig. 3

Fig. 4

Fig. 5

Fig. 6

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5806019 A
- EP 1298454 A2
- DE 10148071 A1

### In der Beschreibung aufgeführte Nicht-Patentliteratur

- **von Kirchner.** Sensordatenverarbeitung eines Laserscanners für autonome Fahrfunktionen von Kraftfahrzeugen. 2000